# EUROPEAN PATENT SPECIFICATION

(11) **EP 4 280 347 B1**
(45) Date of publication and mention of the grant of the patent: **14.05.2025**
(21) Application number: 22739512.6
(22) Date of filing: 14.01.2022
(51) Int. Cl.: H01M 10/613, H01M 10/615, H01M 10/625, H01M 10/6555, H01M 10/658, H01M 50/20, H01M 10/647, H01M 10/653, H01M 50/24, H01M 50/293

(54) **HEAT TRANSFER SUPPRESSION SHEET FOR BATTERY PACK, AND BATTERY PACK**
WÄRMEÜBERTRAGUNGSUNTERDRÜCKUNGSFOLIE FÜR BATTERIEPACK UND BATTERIEPACK
FEUILLE DE SUPPRESSION DE TRANSFERT DE CHALEUR POUR BLOC-BATTERIE, ET BLOC-BATTERIE

(30) Priority: 18.01.2021 JP 2021006046; 18.01.2021 JP 2021006047
(43) Date of publication of application: 22.11.2023
(73) Proprietor: IBIDEN Co., Ltd., Gifu 503-8604 (JP)
(72) Inventor: ANDO Hisashi, Ibi-gun, Gifu 501-0695 (JP); TAKAHASHI Naoki, Ibi-gun, Gifu 501-0695 (JP)
(74) Representative: Hoffmann Eitle
(86) International application number: PCT/JP2022/001240
(87) International publication number: WO 2022/154107

(56) References cited:
- WO-A1-2020/111042
- JP-A- 2019 204 636
- JP-A- 2019 204 637
- JP-A- 2020 072 005
- JP-A- S62 274 129

## Description

### TECHNICAL FIELD

The present invention relates to a heat transfer suppression sheet for a battery pack, which is suitably used for a battery pack serving as a power source for an electric motor that drives an electric vehicle or a hybrid vehicle, for example, and a battery pack using the heat transfer suppression sheet for a battery pack.

### BACKGROUND ART

In recent years, from the viewpoint of environmental protection, electric vehicles or hybrid vehicles driven by electric motors have been actively developed. The electric vehicle or the hybrid vehicle is equipped with a battery pack in which battery cells are connected in series or in parallel to serve as a power source for an electric drive motor.

For the battery cell, a lithium-ion secondary battery capable of high capacity and high output is mainly used as compared with a lead-acid battery, a nickel-metal hydride battery, and the like, but when thermal runaway occurs in one battery cell due to an internal short circuit, an overcharge, or the like of the battery (that is, in the case of "abnormality"), the propagation of heat to other adjacent battery cells may cause thermal runaway of the other adjacent battery cells.

For example, JP 2015-211013 A discloses a power storage device that can achieve effective heat insulation between power storage elements such as lithium-ion secondary batteries. In the power storage device described in JP 2015-211013 A, a first plate member and a second plate member are disposed between a first power storage element and a second power storage element adjacent to each other. Between the first plate member and the second plate member, a low thermal conductive layer, which is a layer of a substance having a lower thermal conductivity than that of the first plate member and the second plate member, is formed.

In the power storage device according to JP 2015-211013 A configured as described above, radiant heat from the first power storage element to the second power storage element or radiant heat from the second power storage element to the first power storage element is blocked by the first plate member and the second plate member. Heat transfer from one plate member to another plate member is also suppressed by the low thermal conductive layer.

However, in the above power storage device, since only a heat-insulating layer is provided between the first power storage element and the second power storage element, it is impossible to effectively cool the battery cell that generates heat during a charge and discharge cycle.

Therefore, JP 2019-175806 A proposes a heat-absorbing sheet for a battery pack that can cool battery cells during normal use while suppressing the propagation of heat between the battery cells when an abnormality occurs. The heat-absorbing sheet described in JP 2019-175806 A contains two or more substances having different dehydration temperatures. At least one of the two or more substances can be dehydrated during normal use of the battery cell, and at least one other substance can be dehydrated when the battery cell is abnormal.

JP 2020-72005 A relates to a heat transfer suppressing sheet in which a flat sheet including a heat absorbing material and/or a heat insulating material is formed on both surfaces of a corrugated sheet including a heat absorbing material and/or a heat insulating material.

JP 2019-204637 A describes a heat transfer suppression sheet which has a heat transfer suppression layer containing inorganic particles and/or inorganic fibers, wherein the heat transfer suppression layer has a quadrangular outer shape in plan view, and has linear grooves interconnecting only one set of end faces which oppose among four end faces in the in-plane direction of the heat transfer suppression layer, and the surface of the grooves has an irregular shape.

JP 2019-204636 A describes a heat transfer suppression sheet which has a heat transfer suppression layer containing inorganic particles and/or inorganic fibers, wherein the heat transfer suppression layer has grooves communicating with the end faces in the in-plane direction in the heat transfer suppression layer, and the surface of the grooves has an irregular shape.

WO 2020/111042 A1 describes an electric power storage module which includes a plurality of storage devices arranged along a first direction and a separator that is disposed between two adjacent storage devices and insulates a space between the two storage devices. Each storage device includes an outer can having an opening, a sealing plate that blocks the opening, and a joint section where the outer can and the sealing plate are joined. The separator has an abutting region that contacts a surface of the outer cans facing in the first direction, and a separated region that overlaps the joint sections when viewed from the first direction and that is recessed in a direction away from the outer cans than the abutting region.

JP S62-274129 A refers to a damping and insulation member sheet constituted by filling recessed sections of a film base material with a viscoelastic body.

### SUMMARY OF INVENTION

### TECHNICAL PROBLEM

When battery cells assembled into a battery pack are subjected to a charge and discharge cycle (that is, in the case of "during normal use"), in order to sufficiently exhibit the charge and discharge performance of the battery cells, it is necessary to maintain the surface temperature of the battery cells at a predetermined value or lower (for example, 150°C or less).

When an abnormal situation occurs in which the temperature of the battery cells is, for example, 200°C or more, it is necessary to effectively cool the battery cells.

As described above, a heat transfer suppression means capable of maintaining the surface temperature of battery cells during normal use and capable of effectively cooling the battery cells in the case of abnormality of high temperature has been required to be further improved in recent years.

The present invention has been made in view of the above problems, and an object of the present invention is to provide a battery pack and a heat transfer suppression sheet for a battery pack that is used in a battery pack in which battery cells are connected in series or in parallel, and that can cool the individual battery cells during normal use while suppressing the propagation of heat between the battery cells when an abnormality occurs.

### SOLUTION TO PROBLEM

The above object of the present invention is achieved by a heat transfer suppression sheet for a battery pack according to independent claim 1.

The convex portion of the covering material may be bonded to the heat-insulating material.

The heat-insulating material may have, on a surface thereof facing the covering material, a concave portion and a convex portion.

The gap may be formed between the concave portion of the heat-insulating material and the concave portion of the covering material.

The convex portion of the heat-insulating material may be bonded to the convex portion of the covering material.

The covering material may be formed of an embossed polymer film or a metal plate.

The gap may be sealed at a temperature of less than 60°C, and the covering material may be configured such that a communication opening that allows the gap to communicate with the outside of the covering material is formed at a temperature of 60°C or more, wherein the covering material is a polymer film that melts at a temperature of 60°C or more.

The gap may be sealed at a temperature of less than 60°C, and the covering material may be configured such that a communication opening that allows the gap to communicate with the outside of the covering material is formed at a temperature of 60°C or more, wherein the heat-insulating material is bonded to the covering material with an adhesive that melts at a temperature of 60°C or more and when the adhesive has melted, the communication opening is formed, or, a number of the covering material being two or more, the covering materials are bonded to each other with an adhesive that melts at a temperature of 60°C or more and when the adhesive has melted, the communication opening is formed.

Adhesives having different melting temperatures may be used as the adhesive in regions such that the adhesives melt stepwise in the regions as the temperature rises.

The adhesive may be applied to regions in different application amounts such that the adhesive melts stepwise in the regions as the temperature rises.

In the present specification, the inventions according to claims 1 to 10, and claim 13 when dependent on any one of claims 1 to 10 are referred to as a "first invention group".

The covering material may completely cover the heat-insulating material.

At least one of the inorganic particles or the inorganic fibers contained in the heat-insulating material may contain a material that releases moisture when heated.

The above object of the present invention is also achieved by a battery pack according to claim 13.

In the present specification, the inventions according to claims 11 and 12, and claim 13 when dependent on claim 11 or 12 are referred to as a "second invention group".

### ADVANTAGEOUS EFFECTS OF INVENTION

The heat transfer suppression sheet for a battery pack of the present invention is a heat transfer suppression sheet used in a battery pack in which battery cells are connected in series or in parallel, and can cool the individual battery cells during normal use while suppressing the propagation of heat between the battery cells when an abnormality occurs.

The heat transfer suppression sheet for a battery pack according to the above "first invention group" is a heat transfer suppression sheet used in a battery pack in which battery cells are connected in series or in parallel. Since the concave portion and the convex portion are formed on a surface of the covering material, the gap is formed between the heat-insulating material and the covering material, and air exists in the gap. Therefore, the air existing in the gap provides a heat insulation effect, and the air with an increased temperature moves inside the gap, and thus an excessive increase in temperature can be prevented.

When an abnormality occurs in which the temperature of the battery cells is high, the moisture contained in the heat-insulating material is evaporated, and thus the heat-insulating material can be cooled by the heat of vaporization.

Further, when the battery pack is abnormal, since the concave portion and the convex portion are formed on a surface of at least one of the heat-insulating material or the covering material, the heated steam is easily released to the outside. Therefore, it is possible to suppress the propagation of heat between the battery cells.

The heat transfer suppression sheet for a battery pack according to the above "second invention group" is a heat transfer suppression sheet used in a battery pack in which battery cells are connected in series or in parallel. The heat transfer suppression sheet includes a covering material that completely covers the heat-insulating material, and the gap is formed between the heat-insulating material and the covering material. Therefore, during normal use of the battery pack, moisture evaporated from the heat-insulating material can stay in the gap, and at this time, the battery cells can be effectively cooled by utilizing the heat of vaporization.

When the battery pack is abnormal, the pressure is increased in the covering material, and the moisture generated from the heat-insulating material is aggregated and forms water droplets, and thus a cooling effect of the battery cells is obtained. Therefore, it is possible to suppress the propagation of heat between the battery cells.

In the battery pack of the present invention, since the heat transfer suppression sheet is interposed between the battery cells, the individual battery cells can be cooled during normal use, the propagation of heat between the battery cells can be suppressed when an abnormality occurs, and the chain of thermal runaway can be prevented.

### BRIEF DESCRIPTION OF DRAWINGS

[Fig. 1] Fig. 1 is a cross-sectional view schematically showing a heat transfer suppression sheet for a battery pack according to a first embodiment of the present invention.
[Fig. 2] Fig. 2 is a plan view schematically showing a heat-insulating material used in the heat transfer suppression sheet for a battery pack according to the first embodiment of the present invention.
[Fig. 3] Fig. 3 is a cross-sectional view schematically showing a battery pack to which the heat transfer suppression sheet for a battery pack according to the first embodiment of the present invention is applied.
[Fig. 4] Fig. 4 is a cross-sectional view schematically showing a heat transfer suppression sheet for a battery pack according to a second embodiment.
[Fig. 5] Fig. 5 is a cross-sectional view schematically showing a heat transfer suppression sheet for a battery pack according to a third embodiment.
[Fig. 6] Fig. 6 is a plan view schematically showing another example of the heat-insulating material used in the heat transfer suppression sheets for a battery pack according to the first to third embodiments.
[Fig. 7] Fig. 7 is a plan view schematically showing still another example of the heat-insulating material used in the heat transfer suppression sheets for a battery pack according to the first to third embodiments.
[Fig. 8] Fig. 8 is a cross-sectional view schematically showing a heat transfer suppression sheet for a battery pack according to a fourth embodiment.
[Fig. 9] Fig. 9 is a plan view schematically showing a heat-insulating material used in the heat transfer suppression sheet for a battery pack according to the fourth embodiment.
[Fig. 10] Fig. 10 is a cross-sectional view schematically showing the heat transfer suppression sheet for a battery pack according to the fourth embodiment when an abnormality occurs.
[Fig. 11] Fig. 11 is a cross-sectional view schematically showing a heat transfer suppression sheet for a battery pack according to a fifth embodiment.
[Fig. 12] Fig. 12 is a cross-sectional view schematically showing a heat transfer suppression sheet for a battery pack according to a sixth embodiment.
[Fig. 13] Fig. 13 is a cross-sectional view schematically showing a heat transfer suppression sheet for a battery pack according to a seventh embodiment.
[Fig. 14] Fig. 14 is a plan view schematically showing another example of the heat-insulating material used in the heat transfer suppression sheets for a battery pack according to the fourth to seventh embodiments.
[Fig. 15] Fig. 15 is a plan view schematically showing still another example of the heat-insulating material used in the heat transfer suppression sheets for a battery pack according to the fourth to seventh embodiments.
[Fig. 16] Fig. 16 is a plan view schematically showing a heat transfer suppression sheet for a battery pack using two kinds of adhesives having different melting temperatures.
[Fig. 17] Fig. 17 is a plan view schematically showing another example of the heat transfer suppression sheet for a battery pack using two kinds of adhesives having different melting temperatures.
[Fig. 18] Fig. 18 is a plan view schematically showing still another example of the heat transfer suppression sheet for a battery pack using two kinds of adhesives having different melting temperatures.
[Fig. 19] Fig. 19 is a cross-sectional view schematically showing a heat transfer suppression sheet for a battery pack according to an eighth embodiment.
[Fig. 20] Fig. 20 is a plan view schematically showing a heat-insulating material used in the heat transfer suppression sheet for a battery pack according to the eighth embodiment.
[Fig. 21] Fig. 21 is a cross-sectional view schematically showing a battery pack to which the heat transfer suppression sheet for a battery pack according to the eighth embodiment is applied.
[Fig. 22] Fig. 22 is a cross-sectional view schematically showing a heat transfer suppression sheet for a battery pack according to a ninth embodiment.
[Fig. 23] Fig. 23 is a cross-sectional view schematically showing a heat transfer suppression sheet for a battery pack according to a tenth embodiment.
[Fig. 24] Fig. 24 is a plan view schematically showing another example of the heat-insulating material used in the heat transfer suppression sheets for a battery pack according to the eighth to tenth embodiments.
[Fig. 25] Fig. 25 is a plan view schematically showing another example of the heat-insulating material used in the heat transfer suppression sheets for a battery pack according to the eighth to tenth embodiments.
[Fig. 26] Fig. 26 is a plan view schematically showing another example of the heat-insulating material used in the heat transfer suppression sheets for a battery pack according to the eighth to tenth embodiments.
[Fig. 27] Fig. 27 is a plan view schematically showing another example of the heat-insulating material used in the heat transfer suppression sheets for a battery pack according to the eighth to tenth embodiments.
[Fig. 28] Fig. 28 is a plan view schematically showing another example of the heat-insulating material used in the heat transfer suppression sheets for a battery pack according to the eighth to tenth embodiments.

### DESCRIPTION OF EMBODIMENTS

The present inventors have intensively studied to provide a heat transfer suppression sheet for a battery pack that can cool individual battery cells during normal use in which relatively low-temperature heat is generated while suppressing the propagation of heat between the battery cells in the case of abnormality in which high-temperature heat is generated.

As a result, the present inventors have found that, when a heat-insulating material containing at least one of inorganic particles or inorganic fibers and a covering material covering at least a part of the heat-insulating material are provided, and a gap is formed between the heat-insulating material and the covering material, the above problems can be solved.

The inventors of the present invention have found that in the inventions according to the "first invention group", more preferably, when a concave portion and a convex portion are formed on a surface of the covering material, a gap is formed between the heat-insulating material and the covering material, and since air exists in the gap, the above problems can be solved more effectively.

That is, during normal use in which the temperature of the battery cells is relatively low, for example, 60°C or less, since the air existing in the gap provides a heat insulation effect, and the air with an increased temperature moves inside the gap, an excessive increase in temperature can be prevented.

When an abnormality occurs in which the temperature of the battery cells is high, the moisture contained in the heat-insulating material is evaporated, and thus the heat-insulating material can be cooled by the heat of vaporization.

In particular, in the case where the gap communicates with the outside of the heat-insulating material and the covering material, the air with an increased temperature during normal use is discharged to the outside, and thus the battery cells can be effectively cooled.

When an abnormality occurs in which the temperature of the battery cells is high, the heated steam is released to the outside through the gap, and thus the propagation of heat between the battery cells can be suppressed.

On the other hand, in the case where the gap does not communicate with the outside of the heat-insulating material and the covering material, if the gap is sealed during normal use and a communication opening that allows the gap to communicate with the outside of the covering material is formed when an abnormality occurs, moisture evaporated from the heat-insulating material can stay in the gap during normal use, and a heat insulation effect can be obtained.

When an abnormality occurs in which the temperature of the battery cells is high, a communication opening that allows the gap to communicate with the outside of the covering material is formed, and the heated steam is released to the outside through the communication opening, and thus the propagation of heat between the battery cells can be suppressed.

The present inventors have found that in the inventions according to the "second invention group", more preferably, when the heat-insulating material is completely sealed by the covering material, and a gap is formed between the heat-insulating material and the covering material, the above problems can be solved more effectively.

That is, during normal use in which the temperature of the battery cells is relatively low, since a gap is present between the heat-insulating material and the covering material, the moisture evaporated from the heat-insulating material can stay in the gap, and the battery cells can be effectively cooled by utilizing the heat of vaporization during evaporation.

When an abnormality occurs in which the temperature of the battery cells is high, adsorbed water contained in the heat-insulating material evaporates or components contained as a material of the heat-insulating material decompose to generate hydrated water as steam. At this time, since the heat-insulating material is completely covered with the covering material, the pressure in the gap between the heat-insulating material and the covering material increases. As a result, the adsorbed water and the hydrated water in a steam state aggregates to form water droplets in the gap, and the water droplets can cool the battery cells and suppress the propagation of heat between the battery cells.

Hereinafter, embodiments of the present invention will be described in detail with reference to the drawings.

In the following description, "to" means that the value is equal to or larger than a lower limit value and equal to or smaller than an upper limit value.

In the following embodiments, embodiments for explaining the present invention according to the "first invention group" are referred to as "first embodiment" to "seventh embodiment", and embodiments for explaining the present invention according to the "second invention group" are referred to as "eighth embodiment" to "tenth embodiment".

First, the "first embodiment" to the "seventh embodiment" related to the above "first invention group" will be described.

### [A1. Heat Transfer Suppression Sheet for Battery Pack]

First, heat transfer suppression sheets for a battery pack according to the first to seventh embodiments and a heat-insulating material applicable to the heat transfer suppression sheets will be described. Thereafter, the heat-insulating material, a covering material, and the like constituting the heat transfer suppression sheet for a battery pack will be described in detail. Further, a method for manufacturing the heat transfer suppression sheet for a battery pack according to the present embodiment will be described.

The first to third embodiments described below are examples in which the gap communicates with the outside of the heat-insulating material and the covering material.

### <First Embodiment>

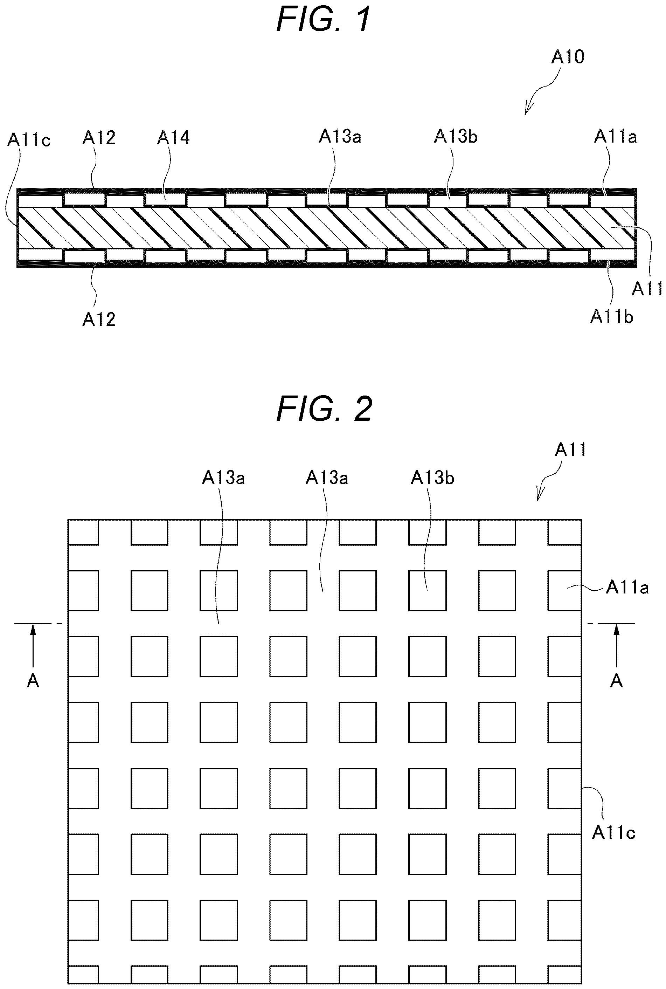

Fig. 1 is a cross-sectional view schematically showing the heat transfer suppression sheet for a battery pack according to the first embodiment. Fig. 2 is a plan view schematically showing the heat-insulating material used in the heat transfer suppression sheet for a battery pack according to the first embodiment. Fig. 1 is a cross-sectional view taken along line A-A in the case where a heat transfer suppression sheet A10 is manufactured using a heat-insulating material A11 shown in Fig. 2. Hereinafter, the heat transfer suppression sheet A10 for a battery pack may be simply referred to as a heat transfer suppression sheet A10.

The heat transfer suppression sheet A10 for a battery pack according to the present embodiment includes the heat-insulating material A11 and covering materials A12 covering a surface A11a and a back surface A11b which are main surfaces of the heat-insulating material A11. In the present embodiment, the covering material A12 does not cover end surfaces A11c of the heat-insulating material A11. As will be described later, when the heat transfer suppression sheet A10 and battery cells are laminated, the surface A11a and the back surface A11b of the heat-insulating material A11 refer to surfaces facing the battery cells, and the end surfaces A11c refer to four surfaces parallel to a thickness direction of the heat transfer suppression sheet A10.

The heat-insulating material A11 contains, for example, inorganic particles and inorganic fibers containing crystal water or adsorbed water, and the crystal water or the adsorbed water has the property of releasing moisture when heated. As shown in Figs. 1 and 2, on the surface A11a of the heat-insulating material A11, groove-shaped concave portions A13a are formed at equal intervals to cross in two directions parallel to two pairs of sides of the heat-insulating material. A region where the concave portions A13a are not formed substantially constitutes convex portions A13b.

The covering material A12 is, for example, a film, and the convex portion A13b of the heat-insulating material A11 is bonded to the covering material A12 with an adhesive (not shown). Since the region where the concave portions A13a are formed is not in contact with the covering material A12, as a result, gaps A14 are formed between the heat-insulating material A11 and the covering material A12. Since the concave portions A13a are formed to reach the end surfaces A11c in four directions of the heat-insulating material A11, the gaps A14 communicate with the outside of the heat-insulating material A11 and the covering material A12, that is, the outside of the heat transfer suppression sheet A10.

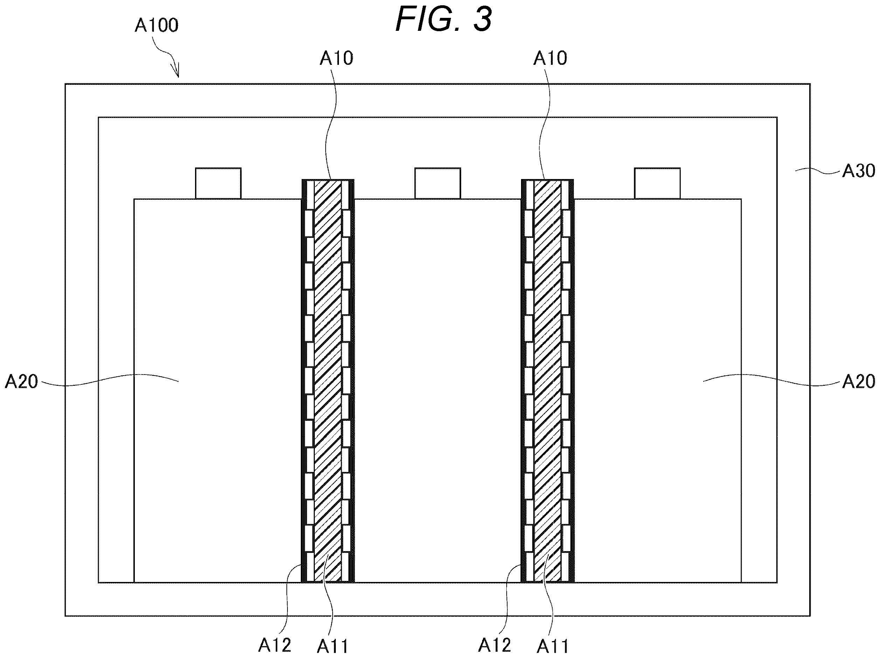

Fig. 3 is a cross-sectional view schematically showing a battery pack to which the heat transfer suppression sheet for a battery pack according to the first embodiment is applied. A battery pack A100 includes a battery case A30, battery cells A20 housed in the battery case A30, and the heat transfer suppression sheets A10 interposed between the battery cells A20. The battery cells A20 are connected in series or in parallel by a bus bar (not shown) or the like.

For example, the battery cell A20 is preferably a lithium-ion secondary battery, but is not particularly limited thereto, and may be applied to other secondary batteries.

In the heat transfer suppression sheet A10 configured as described above, when the temperature rises in a relatively low-temperature range from room temperature (about 20°C) to about 60°C, which is a temperature range of the battery cell A20 during normal use, heat is also propagated to the heat-insulating material A11. In the present embodiment, the heat-insulating material A11 has the gap A14, and since air exists in the gap A14, the heat generated from the battery cell A20 can be suppressed from propagating.

As the temperature rises, the temperature of the air in the gap A14 also increases, but since the gap A14 communicates with the outside of the heat transfer suppression sheet A10, heated air is discharged to the outside of the heat transfer suppression sheet A10. As a result, since new air is constantly introduced into the gap A14, an increase in the temperature of the heat transfer suppression sheet A10 can be suppressed, and an increase in the temperature of the battery cell A20 can also be suppressed.

When the temperature of the battery cell A20 rises abnormally, high-temperature heat is further propagated to the heat-insulating material A11. In the present embodiment, since the heat-insulating material A11 contains inorganic particles containing crystal water or adsorbed water, and the crystal water or the adsorbed water is a material that releases moisture when heated, moisture is evaporated from the inorganic particles when the heat-insulating material A11 is heated. At this time, since the heat-insulating material A11 loses the heat of vaporization and is cooled, the heat transfer suppression sheet A10 can cool the battery cell A20.

Since high-temperature steam does not stay in the gap A14 and is released to the outside of the heat transfer suppression sheet A10 from the end surface A11c of the heat-insulating material A11, the heat transfer suppression sheet A10 can cool the battery cell A20 more effectively.

When the use (that is, charge and discharge) of the battery pack A100 is stopped after the battery cell A20 is effectively cooled, the water vapor remaining in the gap A14 is cooled and forms water droplets, which are absorbed into the heat-insulating material A11 over time. Then, when the battery pack A100 is used next time, the moisture in the heat-insulating material A11 is evaporated again, the heat-insulating material A11 loses the heat of vaporization, and thus the battery cell A20 can be cooled.

### <Second Embodiment>

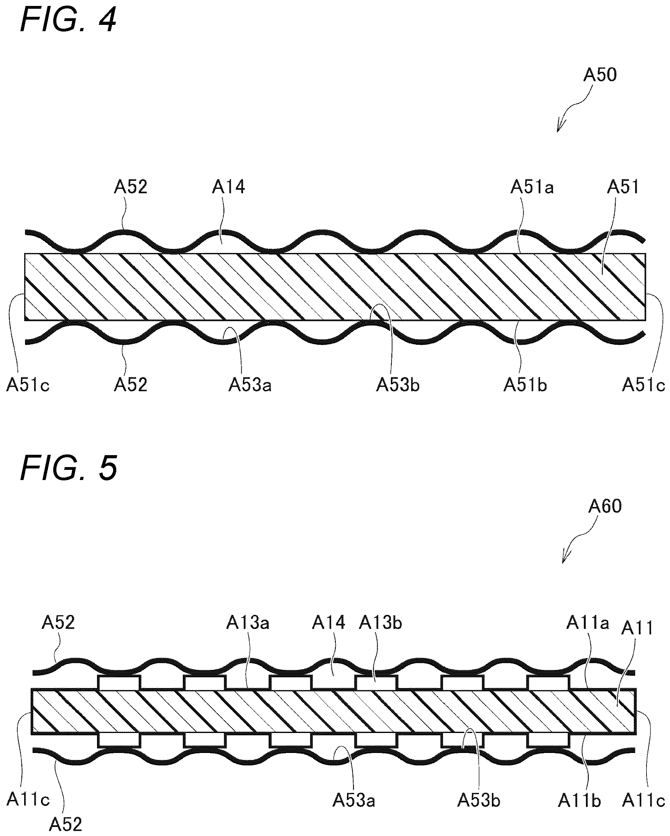

Fig. 4 is a cross-sectional view schematically showing the heat transfer suppression sheet for a battery pack according to the second embodiment.

In Figs. 4 and 5 showing the following second and third embodiments, the same or equivalent parts as those in the first embodiment are denoted by the same reference numerals in the drawings, and the description thereof is omitted or simplified. Since the second and third embodiments described below can be used in place of the heat transfer suppression sheet A10 described in the battery pack A100 shown in Fig. 3, effects and the like will be described assuming that the heat transfer suppression sheets according to the second and third embodiments are applied to the battery pack A100.

A heat transfer suppression sheet A50 for a battery pack according to the second embodiment includes a heat-insulating material A51 and covering materials A52 covering a surface A51a and a back surface A51b of the heat-insulating material A51. As in the first embodiment, the covering material A52 does not cover end surfaces A51c of the heat-insulating material A51.

In the second embodiment, the surface A51a and the back surface A51b of the heat-insulating material A51 are flat, and no concave portions or convex portions are formed. On the other hand, the covering material A52 is formed of a film, and the entire surface thereof is embossed. On a surface facing the heat-insulating material A51 in the covering material A52, concave portions A53a recessed in a groove shape in a direction away from the heat-insulating material A51 and convex portions A53b protruding toward the heat-insulating material A51 are formed. The convex portions A53b of the covering material A52 is bonded to the heat-insulating material A51 with an adhesive (not shown), and gaps A14 are formed between the concave portions A53a and the heat-insulating material A51.

In the heat transfer suppression sheet A50 configured as described above, since the gap A14 communicates with the outside of the heat transfer suppression sheet A50, the same effects as those of the first embodiment can also be obtained during normal use and when an abnormality occurs. When the heat transfer suppression sheet A50 is configured using the covering material A52 shown in the second embodiment, since the covering material A52 formed of a film is easy to process, the concave portion A53a and the convex portion A53b having desired shapes can be easily formed.

### <Third Embodiment>

Fig. 5 is a cross-sectional view schematically showing the heat transfer suppression sheet for a battery pack according to the third embodiment.

A heat transfer suppression sheet A60 for a battery pack according to the third embodiment includes the heat-insulating material A11 and the covering materials A52 covering the surface A11a and the back surface A11b of the heat-insulating material A11. As in the first and second embodiments, the covering material A52 does not cover the end surfaces A11c of the heat-insulating material A11.

In the present embodiment, as in the first embodiment, the concave portions A13a and the convex portions A13b are formed in the heat-insulating material A11. As in the second embodiment, the covering material A52 is formed of a film whose entire surface is embossed, and on a surface facing the heat-insulating material A11 in the covering material A52, the concave portions A53a recessed in a groove shape in a direction away from the heat-insulating material A11 and the convex portions A53b protruding toward the heat-insulating material A11 are formed.

In the present embodiment, the shape of the covering material A52 is designed such that, when the heat-insulating material A11 is bonded to the covering material A52, the groove-shaped concave portion A53a of the covering material A52 and the groove-shaped concave portion A13a of the heat-insulating material A11 are aligned with each other, and the convex portion A53b of the covering material A52 and the convex portion A13b of the heat-insulating material A11 are aligned with each other.

The convex portions A53b of the covering material A52 is bonded to the convex portion A13b of the heat-insulating material A11 with an adhesive (not shown), and the gaps A14 are formed between the concave portions A53a of the covering material A52 and the concave portions A13a of the heat-insulating material A11.

In the heat transfer suppression sheet A60 configured as described above, the same effects as those of the first and second embodiments can also be obtained during normal use and when an abnormality occurs. Since the gap A14 is formed by the concave portion A13a and the concave portion A53a, a volume of the gap A14 is increased as compared with the heat transfer suppression sheets according to the first and second embodiments. Therefore, the temperature of the air in the gap A14 is less likely to increase, and a heat insulation effect of the heat transfer suppression sheet A60 is improved. Since heated air and high-temperature steam move more easily, the effect of cooling the battery cell A20 can be further improved.

In the second and third embodiments, shapes of the groove-shaped concave portion A53a and convex portion A53b of the covering material A52 are the same as, for example, a shape of the surface of the heat-insulating material A11 shown in Fig. 5, but the present invention is not limited thereto. For example, a wave-type covering material having grooves extending only in a pair of side directions of a heat-insulating material, or a wave-type covering material having grooves extending in diagonal directions of a heat-insulating material can also be used.

In the above first to third embodiments, the covering materials are disposed only on the surface and the back surface of the heat-insulating material, but the covering material may cover a part of a cross section or the entire cross section in addition to the surface and the back surface of the heat-insulating material. However, it is necessary to set the shape of the gap or form an opening in a part of the covering material such that at least a part of the gaps formed between the covering material and the heat-insulating material communicates with the outside of the heat transfer suppression sheet.

The heat transfer suppression sheets for a battery pack according to the first to third embodiments have been described in order. In the above first to third embodiments, an example using the heat-insulating material A11 shown in Fig. 2 has been given, but the shape of the heat-insulating material is not particularly limited, and for example, heat-insulating materials having concave portions of various shapes shown below can be used.

Next, another example of the heat-insulating material used in the heat transfer suppression sheets for a battery pack according to the first to third embodiments will be described.

### <Another Example of Heat-insulating Material>

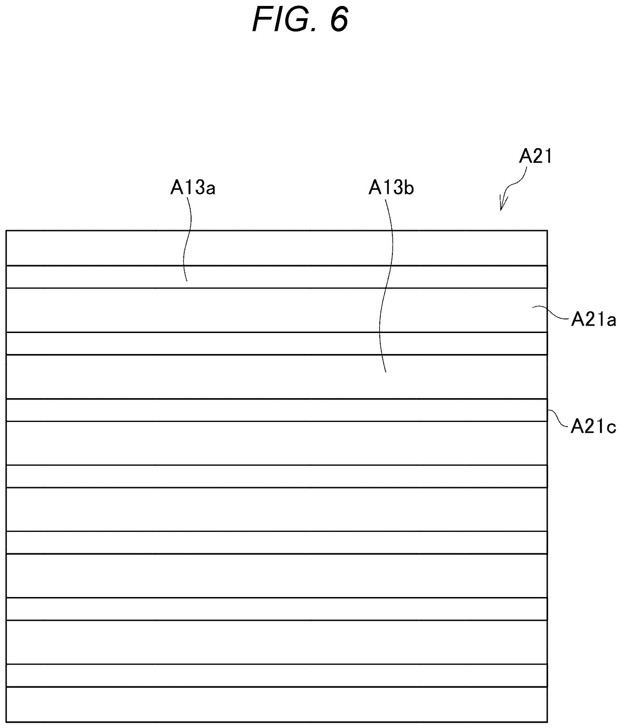

Fig. 6 is a plan view schematically showing another example of the heat-insulating material used in the heat transfer suppression sheets for a battery pack according to the first to third embodiments.

As shown in Fig. 6, groove-shaped concave portions A13a extending in a direction parallel to one side of a heat-insulating material A21 are formed at equal intervals on a surface A21a of the heat-insulating material A21, and a region where the concave portions A13a are not formed substantially constitutes the convex portions 13b. Since the concave portion A13a is formed to reach end surfaces A21c of the heat-insulating material A21, when a covering material is bonded to the surface A21a of the heat-insulating material A21, the gap communicates with the outside of the heat transfer suppression sheet.

The heat-insulating material A21 configured as described above can also be applied to the heat transfer suppression sheets for a battery pack according to the first to third embodiments, and the same effects as those of the first to third embodiments can be obtained.

### <Still Another Example of Heat-insulating Material>

In the heat-insulating material 11 shown in Fig. 2 and the heat-insulating material A21 shown in Fig. 6, all the concave portions A13a reach end portions of the heat-insulating material, and all the gaps formed between the heat-insulating material and the covering material have a structure communicating with the outside, but the present invention is not limited thereto.

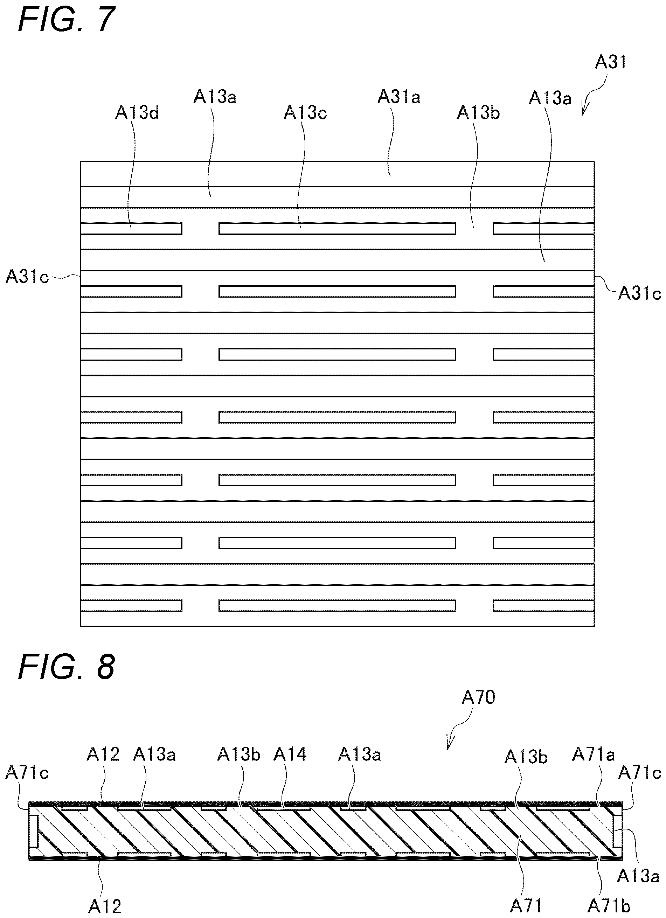

Fig. 7 is a plan view schematically showing still another example of the heat-insulating material used in the heat transfer suppression sheets for a battery pack according to the first to third embodiments.

As shown in Fig. 7, groove-shaped concave portions A13a extending in one direction are regularly formed on a surface A31a of a heat-insulating material A31, and the concave portion A13a reaches a pair of end surfaces A31c facing each other of the heat-insulating material A31. A groove-shaped concave portion A13c and groove-shaped concave portions A13d extending in the same direction as the concave portion A13a are formed between the adjacent concave portions A13a. Both end portions of the concave portion A13c do not reach the end surface A31c of the heat-insulating material A31, and when a covering material is bonded to the surface A31a of the heat-insulating material A31, a gap formed between the concave portion A13c and the covering material does not communicate with the outside of the heat transfer suppression sheet.

In the concave portion A13d, one end portion reaches the end surface A31c of the heat-insulating material A31, and the other end portion does not reach the end surface A31c of the heat-insulating material A31. Therefore, when a covering material bonded to the surface A31a of the heat-insulating material A31, a gap formed between the concave portion A13d and the covering material communicates with the outside of the heat transfer suppression sheet.

In a heat transfer suppression sheet using the heat-insulating material A31 configured as described above, since the gaps formed between the concave portions A13a and A13d and the covering material communicate with the outside of the heat transfer suppression sheet, the same effects as those of the first to third embodiments can be obtained.

Since the gap formed between the concave portion A13c and the covering material does not communicate with the outside, heated air or high-temperature steam is not discharged to the outside and stays in the gap. However, when charge and discharge of the battery pack A100 are stopped and the battery cell A20 is cooled, the steam staying in the gap is also cooled and forms water droplets, which are absorbed into the heat-insulating material A31 over time. Therefore, when the battery pack A100 is used next time, the moisture in the heat-insulating material A31 can be evaporated again, and thus a cooling effect due to the heat of vaporization can be maintained.

The above first to third embodiments are examples in which the gap communicates with the outside of the heat-insulating material and the covering material, but the present invention is not limited to such a configuration. For example, in the case of a configuration in which the gap is sealed during normal use and a communication opening that allows the gap to communicate with the outside of the covering material is formed when an abnormality occurs, it is possible to cool the battery cells more effectively during normal use and when an abnormality occurs, and it is possible to suppress the propagation of heat between the battery cells.

Hereinafter, fourth to seventh embodiments will be described.

Since the fourth to seventh embodiments described below can also be used in place of the heat transfer suppression sheet A10 described in the battery pack A100 shown in Fig. 3, effects and the like will be described assuming that the heat transfer suppression sheets according to the fourth to seventh embodiments are applied to the battery pack A100.

### <Fourth Embodiment>

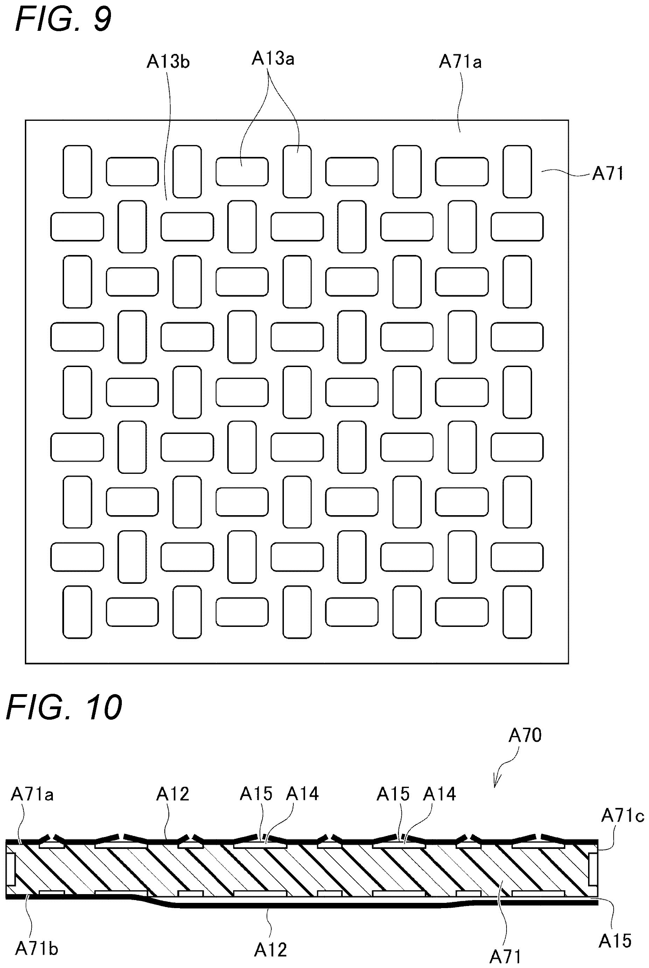

Fig. 8 is a cross-sectional view schematically showing the heat transfer suppression sheet for a battery pack according to the fourth embodiment. Fig. 9 is a plan view schematically showing the heat-insulating material used in the heat transfer suppression sheet for a battery pack according to the fourth embodiment. The fourth embodiment shown in Figs. 8 and 9 differs from the first embodiment shown in Figs. 1 and 2 only in the shape of the concave portion A13a and whether the concave portion A13a communicates with the outside. Therefore, in Figs. 8 and 9, the same or equivalent parts as those in the first embodiment are denoted by the same reference numerals in the drawings, and the description thereof is omitted or simplified.

As shown in Figs. 8 and 9, concave portions A13a are regularly formed on a surface A71a of a heat-insulating material A71 constituting a heat transfer suppression sheet A70, and a region where the concave portions A13a are not formed substantially constitutes the convex portions A13b.

The concave portions A13a have, for example, a rectangular shape in a plan view, and as shown in Fig. 9, concave portions whose longitudinal directions are parallel to one side of the heat-insulating material A71 and concave portions whose longitudinal directions are perpendicular to one side of the heat-insulating material A71 are alternately disposed.

The covering material A12 is, for example, a polymer film that melts at a temperature of 60°C or more, and the convex portion A13b of the heat-insulating material A71 is bonded to the covering material A12 with an adhesive (not shown). In the present embodiment, an adhesive made of an organic substance or an inorganic substance is used, and the adhesive has the property of melting at 60°C or more.

Since the region where the concave portions A13a are formed is not in contact with the covering material A12, as a result, the gaps A14 are formed between the heat-insulating material A71 and the covering material A12. Since the convex portions A13b around the gaps A14 is bonded to the covering material A12, the gaps A14 are always sealed at a temperature of less than 60°C.

In the heat transfer suppression sheet A70 configured as described above, when the temperature rises in a relatively low-temperature range from room temperature (about 20°C) to about 150°C, which is a temperature range of the battery cell A20 during normal use, heat is also propagated to the heat-insulating material A71. In the present embodiment, since the heat-insulating material A71 contains inorganic particles containing crystal water or adsorbed water, and the crystal water or the adsorbed water is a material that releases moisture when heated, moisture is evaporated from the inorganic particles when the heat-insulating material A71 is heated. Part of the evaporated moisture stays in the gap A14, and the other part is released from end surfaces A71c of the heat-insulating material A71. At this time, since the heat-insulating material A71 loses the heat of vaporization and is cooled, the heat transfer suppression sheet A70 can effectively cool the battery cell A20.

When the use (that is, charge and discharge) of the battery pack A100 is stopped after the battery cell A20 is effectively cooled, the water vapor staying in the gap A14 is cooled and forms water droplets, which are absorbed into the heat-insulating material A71 over time. Then, when the battery pack A100 is used next time, the moisture in the heat-insulating material A71 is evaporated again, the heat-insulating material A71 loses the heat of vaporization, and the cycle of cooling the battery cell A20 is repeated.

Fig. 10 is a cross-sectional view schematically showing the heat transfer suppression sheet for a battery pack according to the fourth embodiment when an abnormality occurs. On the surface A71a of the heat-insulating material A71, the covering material A12 is partially melted, and on a back surface A71b, an adhesive for bonding the covering material A12 to the heat-insulating material A71 is melted due to an increase in temperature.

As shown in Fig. 10, when an abnormality occurs, for example, when the temperature of the battery cell A20 rises to, for example, 200°C or more, the covering material A12 melts, and communication openings A15 that allow the gaps A14 to communicate with the outside are formed. In the case of using the covering material A12 that does not melt even at a high temperature, when the adhesive melts, the communication openings A15 that allow the gap A14 to communicate with the outside of the heat transfer suppression sheet A70 are formed.

When the communication opening A15 is formed in this manner, the steam evaporated from the inorganic particles, staying in the gap A14, and reaching a high temperature is released to the outside of the heat transfer suppression sheet A70 through the communication opening A15. Therefore, even in the case where thermal runaway occurs in the battery cell A20, it is possible to effectively suppress the propagation of heat between the battery cells A20.

Both the polymer film and the adhesive used in the present embodiment have the property of melting at any temperature of 60°C or more. That is, in a temperature range of less than 60°C, the gap 14 is always sealed. Since polymer films and adhesives have various melting temperatures depending on kinds thereof, a polymer film or an adhesive having a desired melting temperature in a range of 60°C or more can be selected as necessary.

The temperature at which a communication opening that allows the gap A14 to communicate with the outside of the covering material A12 is formed is preferably 80°C or more, and more preferably 100°C or more.

On the other hand, an upper limit of the temperature at which a communication opening that allows the gap A14 to communicate with the outside of the covering material A12 is formed, that is, an upper limit of the temperature at which the polymer film or the adhesive melts is not particularly limited, but is preferably 500°C or less, more preferably 350°C or less, still more preferably 300°C or less, and particularly preferably 250°C or less.

### <Fifth Embodiment>

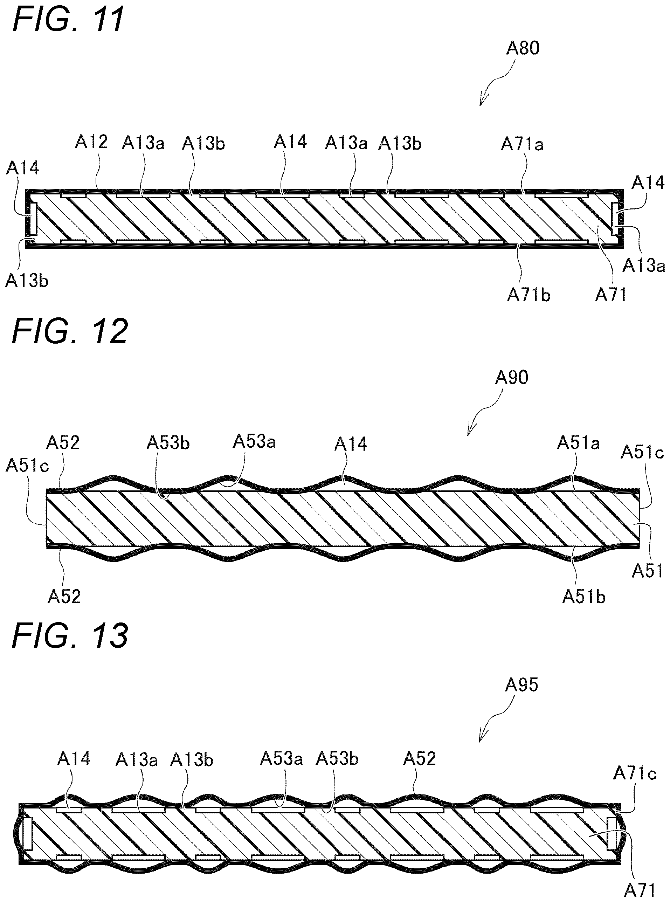

Fig. 11 is a cross-sectional view schematically showing the heat transfer suppression sheet for a battery pack according to the fifth embodiment.

In Fig. 11 showing the following fifth embodiment, the same or equivalent parts as those in the fourth embodiment are denoted by the same reference numerals in the drawings, and the description thereof is omitted or simplified.

A heat transfer suppression sheet A80 for a battery pack according to the fifth embodiment includes the heat-insulating material A71, and the covering material A12 covering the front surface A71a, the back surface A71b, and the end surfaces A71c which are main surfaces of the heat-insulating material A71. In the present embodiment, the concave portions A13a and the convex portions A13b are also formed on the end surfaces A71c of the heat-insulating material A71. That is, the covering material A12 formed in a bag shape with an adhesive (not shown) or the like covers the entire surface of the heat-insulating material A71, and the heat-insulating material A71 is completely sealed by the covering material A12.

In the heat transfer suppression sheet A80 configured as described above, the same effects as those of the fourth embodiment can also be obtained during normal use. In the fifth embodiment, since the heat-insulating material A71 is completely covered with the covering material A12, when the heat-insulating material A71 is heated during normal use and moisture evaporates from the inorganic particles, all the evaporated moisture stays in the gap A14 and is not released to the outside from the heat transfer suppression sheet A80. However, since the moisture is evaporated, the heat-insulating material A71 loses the heat of vaporization and is cooled, and the heat transfer suppression sheet A80 can effectively cool the battery cell A20.

In the fifth embodiment, since the evaporated moisture is not released to the outside, when the use of the battery pack is stopped, most of the evaporated moisture is again absorbed into the heat-insulating material A71. Therefore, according to the heat transfer suppression sheet A80 for a battery pack according to the fifth embodiment, it is possible to maintain the effect of cooling the battery cell A20 for a long period of time.

Further, when an abnormality occurs, the adhesive for bonding the covering materials A12 to each other is melted or the covering material A12 is melted to form a communication opening between the gap A14 and the outside as in the case shown in Fig. 10, and thus the same effects as in the fourth embodiment can be obtained.

### <Sixth Embodiment>

Fig. 12 is a cross-sectional view schematically showing the heat transfer suppression sheet for a battery pack according to the sixth embodiment. In Fig. 12 showing the following sixth embodiment, the same or equivalent parts as those in the second embodiment shown in Fig. 4 are denoted by the same reference numerals in the drawings, and the description thereof is omitted or simplified.

In a heat transfer suppression sheet A90 for a battery pack according to the sixth embodiment, a surface of the heat-insulating material A51 is flat, and no concave portions or convex portions are formed. On the other hand, the covering material A52 is formed of a film, and a surface thereof is embossed. On a surface facing the heat-insulating material A51 in the covering material A52, the concave portions A53a recessed in a direction away from the heat-insulating material A51 and the convex portions A53b protruding toward the heat-insulating material A51 are formed. The convex portions A53b of the covering material A52 is bonded to the heat-insulating material A51 with an adhesive (not shown), and sealed gaps A14 are formed between the concave portions A53a and the heat-insulating material A51.

In the heat transfer suppression sheet A90 configured as described above, the same effects as those of the fourth embodiment can also be obtained during normal use and when an abnormality occurs. By forming a heat transfer suppression sheet to cover the entire surface of the heat-insulating material A51 using the covering material A52 shown in the sixth embodiment, it is possible to maintain the effect of cooling the battery cell A20 for a long period of time as in the fifth embodiment.

### <Seventh Embodiment>

Fig. 13 is a cross-sectional view schematically showing the heat transfer suppression sheet for a battery pack according to the seventh embodiment. In Fig. 13 showing the following seventh embodiment, the same or equivalent parts as those in the third embodiment shown in Fig. 5 are denoted by the same reference numerals in the drawings, and the description thereof is omitted or simplified.

A heat transfer suppression sheet A95 for a battery pack according to the seventh embodiment includes the heat-insulating material A71 and the covering material A52 covering the entire surface of the heat-insulating material A71. In the present embodiment, the concave portions A13a and the convex portions A13b are formed in the heat-insulating material A71. On a surface facing the heat-insulating material A71 in the covering material, the concave portions A53a recessed in a direction away from the heat-insulating material A71 and the convex portions A53b having a shape protruding toward the heat-insulating material A71 are also formed. The convex portions A53b of the covering material A52 is bonded to the convex portions A13b of the heat-insulating material A71 with an adhesive (not shown), and sealed gaps A14 are formed between the concave portions A53a of the covering material A52 and the concave portions A13a of the heat-insulating material A71.

In the heat transfer suppression sheet A95 configured as described above, the same effects as those of the fourth embodiment can also be obtained during normal use and when an abnormality occurs. Since the gap A14 is formed by the concave portion A13a and the concave portion A53a, the volume of the gap A14 is increased as compared with the heat transfer suppression sheets for a battery pack according to the fourth to sixth embodiments. Therefore, moisture is easily evaporated from the heat-insulating material A71, and the effect of cooling the battery cell A20 during normal use can be further improved.

In the seventh embodiment, the covering material A52 covers the end surfaces A71c of the heat-insulating material A71, but the end surfaces A71c of the heat-insulating material A71 may be open as in the fourth embodiment. By opening the end surfaces A71c, since part of the evaporated moisture is released to the outside during normal use, the moisture in the heat-insulating material A71 is more easily evaporated, and the cooling effect due to the heat of vaporization can be enhanced.

In the case of abnormality, when the covering material A52 that does not melt at a high temperature is used, the communication openings A15 that allow the gaps A14 to communicate with the outside of the heat transfer suppression sheet A95 are formed when the adhesive melts, and thus the effect of cooling the battery cell A20 can be obtained.

The heat transfer suppression sheets for a battery pack according to the fourth to seventh embodiments have been described in order. Next, another example of the heat-insulating material used in the heat transfer suppression sheets for a battery pack according to the fourth to seventh embodiments will be described.

### <Another Example of Heat-insulating Material>

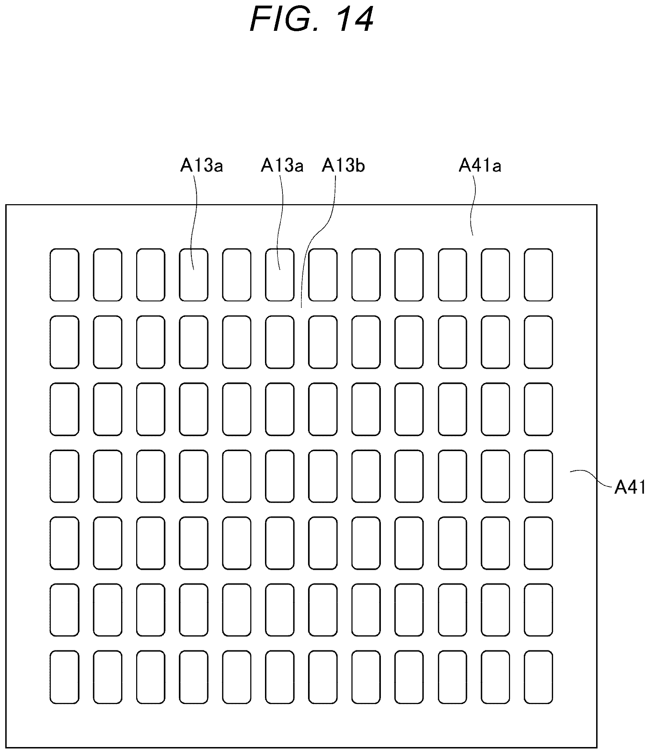

Fig. 14 is a plan view schematically showing another example of the heat-insulating material used in the heat transfer suppression sheets for a battery pack according to the fourth to seventh embodiments. In the fourth, fifth, and seventh embodiments, an example using the heat-insulating material A71 shown in Fig. 9 has been given, but the shape of the heat-insulating material is not particularly limited.

As shown in Fig. 14, concave portions A13a are regularly formed on a surface A41a of a heat-insulating material A41, and a region where the concave portions A13a are not formed substantially constitutes the convex portions A13b.

In the present embodiment, the concave portions A13a have, for example, a rectangular shape in a plan view, and all the concave portions A13a are disposed such that longitudinal directions thereof are parallel to one side of the heat-insulating material A41.

The heat-insulating material A41 configured as described above can also be applied to the heat transfer suppression sheets for a battery pack according to the fourth to seventh embodiments, and the same effects as those of the fourth to seventh embodiments can be obtained.

### <Still Another Example of Heat-insulating Material>

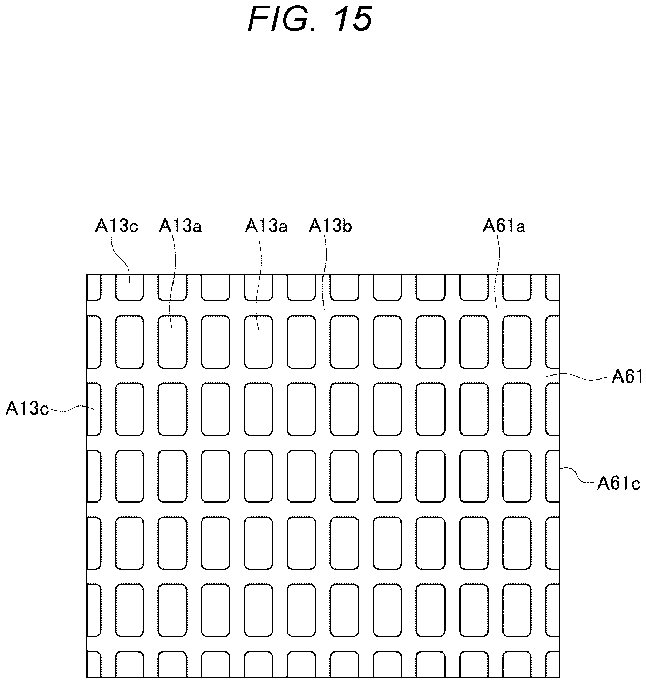

Fig. 15 is a plan view schematically showing still another example of the heat-insulating material used in the heat transfer suppression sheets for a battery pack according to the fourth to seventh embodiments.

In the heat-insulating material A71 shown in Fig. 9 and the heat-insulating material A41 shown in Fig. 14, all the concave portions A13a are sealed by the covering material, but the present invention is not limited thereto.

As shown in Fig. 15, concave portions A13a are regularly formed on a surface A61a of a heat-insulating material A61, and a region where the concave portions A13a are not formed substantially constitutes the convex portions A13b. However, the concave portions A13c formed in the vicinity of end surfaces A61c of the heat-insulating material A61 reach the end surfaces A61c of the heat-insulating material A61.

For example, when the heat-insulating material A71 in the fourth embodiment is replaced with the heat-insulating material A61, the concave portions A13c formed in the vicinity of the end surfaces A61c of the heat-insulating material A61 do not constitute sealed gaps. However, since sealed gaps are formed between some of the concave portions A13a and the covering material A12, the same effects as those of the fourth to seventh embodiments can be obtained.

Next, the heat-insulating material, the covering material, the adhesive constituting the heat transfer suppression sheet for a battery pack according to the present embodiment and the thickness of the heat transfer suppression sheet will be described in detail.

### <Heat-insulating Material>

The heat-insulating material used in the heat transfer suppression sheet for a battery pack according to the present embodiment contains at least one of inorganic particles or inorganic fibers.

The inorganic particles are preferably inorganic hydrates or hydrous porous materials. The inorganic hydrates receive heat from the battery cell A20, thermally decompose when the temperature is equal to or higher than a thermal decomposition start temperature, and release crystal water thereof, thereby cooling the battery cell A20. The inorganic hydrates form porous bodies after releasing the crystal water, and an effective heat insulation effect can be obtained due to a large number of air holes.

As the inorganic particles, a single kind of inorganic particles may be used, or two or more kinds of inorganic hydrate particles may be used in combination. Since the inorganic hydrates have different thermal decomposition start temperatures depending on their kinds, the battery cell A20 can be cooled in multiple stages by using two or more kinds of inorganic hydrate particles in combination.

Specific examples of the inorganic hydrates include aluminum hydroxide (Al(OH)₃), magnesium hydroxide (Mg(OH)₂), calcium hydroxide (Ca(OH)₂), zinc hydroxide (Zn(OH)₂), iron hydroxide (Fe(OH)₂), manganese hydroxide (Mn(OH)₂), zirconium hydroxide (Zr(OH)₂), gallium hydroxide (Ga(OH)₃), and the like.

Examples of the fibrous inorganic hydrates include fibrous calcium silicate hydrates.

Specific examples of the hydrous porous materials include zeolite, kaolinite, montmorillonite, acid clay, diatomaceous earth, sepiolite, wet silica, dry silica, aerogel, mica, vermiculite, and the like.

Further, examples of the inorganic fibers include alumina fibers, silica fibers, alumina silicate fibers, rock wool, magnesium silicate fibers, alkaline earth silicate fibers, glass fibers, zirconia fibers, potassium titanate fibers, and the like. Among these inorganic fibers, magnesium silicate fibers can be suitably used as a material that releases moisture when heated.

As the inorganic fibers, a single kind of inorganic fibers may be used, or two or more kinds of inorganic fibers may be used in combination.

In addition to the inorganic particles and the inorganic fibers, organic fibers, organic binders, or the like may be blended into the heat-insulating material as necessary. The organic fibers and the organic binders are useful for reinforcing the heat-insulating material and improving the moldability thereof.

The inorganic particles and the inorganic fibers contained in the heat-insulating material do not necessarily contain a material that releases moisture when heated. During the manufacture of the heat-insulating material, a small amount of moisture is inevitably contained, and therefore, in the case where the temperature of the battery cell A20 rises during normal use and when an abnormality occurs, the moisture contained in the heat-insulating material evaporates, thereby obtaining an effect of cooling the battery cell A20.

In the present embodiment, the heat-insulating material may contain at least one of the inorganic particles or the inorganic fibers, and with respect to a total mass of the heat transfer suppression sheet, a content of the inorganic particles is preferably 20% or more by mass and 80% or less by mass, and a content of the inorganic fibers is preferably 5% or more by mass and 70% or less by mass. By setting the contents as described above, the shape retention, the pressing force resistance, and the wind pressure resistance can be improved by the inorganic fibers, and the retention capacity of the inorganic particles can be secured.

Organic fibers, organic binders, or the like may be blended into the heat transfer suppression sheet according to the present embodiment as necessary. The organic fibers and the organic binders are useful for reinforcing the heat transfer suppression sheet and improving the moldability thereof.

### <Covering Material>

As the covering material, a polymer film or a metal film (metal plate) can be used.

Examples of the polymer film include polyimide, polycarbonate, PET, p-phenylene sulfide, polyetherimide, cross-linked polyethylene, flame-retardant chloroprene rubber, polyvinylidene fluoride, rigid vinyl chloride, polybutylene terephthalate, PTFE, PFA, FEP, ETFE, rigid PCV, flame-retardant PET, polystyrene, polyether sulfone, polyamide-imide, polyacrylonitrile, polyethylene, polypropylene, polyamide, and the like.

The polymer film has a melting point of 60°C to 600°C. It is preferable that the polymer film melts at a temperature of 60°C or more because the covering material (polymer film) can seal gaps at a temperature of less than 60°C. When the polymer film melts at any temperature of 60°C or more, communication openings that allow the gaps to communicate with the outside of the covering material are formed, which is preferable.

In the present embodiment, when a polymer film is used as the covering material, the melting temperature of the polymer film is preferably 60°C or more, more preferably 80°C or more, and still more preferably 100°C or more.

On the other hand, the melting temperature of the polymer film is preferably 500°C or less, more preferably 350°C or less, still more preferably 300°C or less, and particularly preferably 250°C or less.

Examples of the metal film include aluminum foil, stainless steel foil, and copper foil.

### <Adhesive>

In the present embodiment, as a method of sealing the gap formed between the heat-insulating material and the covering material, a method of bonding the heat-insulating material to the covering material or a method of bonding the covering materials to each other can be applied.

Examples of an adhesive for bonding the heat-insulating material to the covering material include those using urethane, polyethylene, polypropylene, polystyrene, nylon, polyester, vinyl chloride, vinylon, acrylic resin, silicone, and the like as a raw material.

The adhesive can also be applied as an adhesive for bonding the covering materials to each other.

When the adhesive melts at a temperature of 60°C or more, the covering material can seal the gaps at a temperature of less than 60°C, which is preferable. When the adhesive melts at any temperature of 60°C or more, communication openings that allow the gaps to communicate with the outside of the covering material are formed, which is preferable.

In the present embodiment, when the adhesive is used, the melting temperature of the adhesive is preferably 60°C or more, more preferably 80°C or more, and still more preferably 100°C or more.

On the other hand, the melting temperature of the adhesive is preferably 500°C or less, more preferably 350°C or less, still more preferably 300°C or less, and particularly preferably 250°C or less.

As a method of sealing the gaps formed between the heat-insulating material and the covering material, a method of covering the entire heat-insulating material with the covering material can be applied.

Examples of the method of covering the entire heat-insulating material with the covering material include lamination (dry lamination, thermal lamination), pouch lamination, vacuum packaging, vacuum lamination, shrink packaging, and caramel packaging.

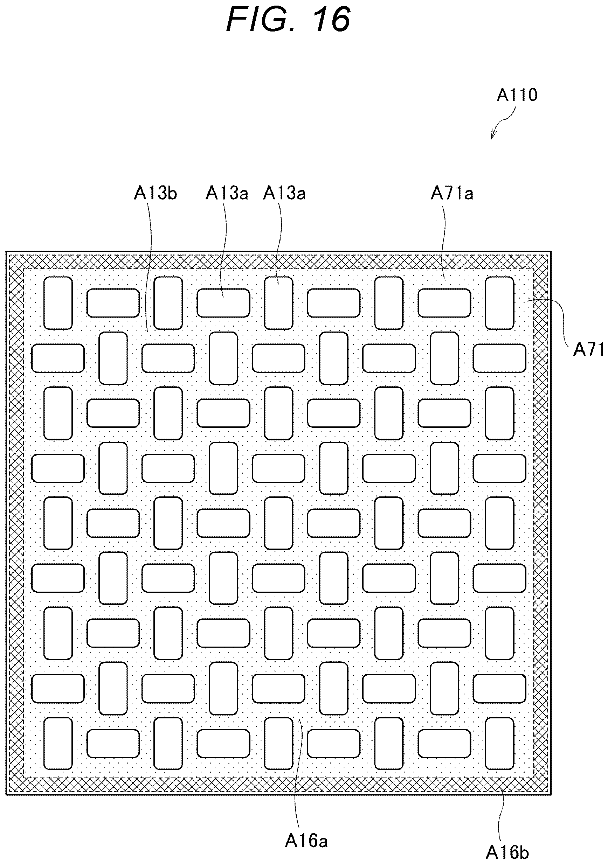

As the adhesive for bonding the heat-insulating material to the covering material or bonding the covering materials to each other, adhesives having different melting temperatures may be used such that the adhesives melt stepwise in regions as the temperature rises. An example using adhesives will be described below with reference to the drawings. The following examples shown in Figs. 16 to 18 are modifications of the heat transfer suppression sheet A70 for a battery pack according to the fourth embodiment shown in Figs. 8 and 9.

Fig. 16 is a plan view schematically showing a heat transfer suppression sheet for a battery pack using two kinds of adhesives having different melting temperatures.

As shown in Fig. 16, in a heat transfer suppression sheet A110 for a battery pack, in a region of the convex portions A13b of the heat-insulating material A71, an adhesive A16b is used in peripheral edges in the vicinity of end surfaces, and an adhesive A16a is used in a region inside the peripheral edges. The adhesive A16a and the adhesive A16b have different melting temperatures, and specifically, the melting temperature of the adhesive A16b is higher than the melting temperature of the adhesive A16a. The melting temperature of the covering material is higher than the melting temperature of the adhesive A16b.

In the heat transfer suppression sheet A110 configured as described above, at a temperature lower than the melting temperature of the adhesive A16a in a first stage, the gaps between the concave portions A13a and the covering material are sealed. Therefore, when the heat-insulating material A71 is heated and moisture is evaporated from the inorganic particles, all the evaporated moisture stays in the gaps and is not released to the outside from the heat transfer suppression sheet A110, and the heat-insulating material A71 loses the heat of vaporization and is cooled due to the evaporation of the moisture.

Thereafter, in a second stage, when the temperature of the battery cell further rises to be equal to or higher than the melting temperature of the adhesive A16a and lower than the melting temperature of the adhesive A16b, the region adhered by the adhesive A16a is separated, volumes of the gaps increase, and thus moisture is easily evaporated from the heat-insulating material A71. Since the heated steam does not stay in a fixed position and can move over a wider region than in the first stage, the heat transfer suppression sheet A110 can effectively cool the battery cell.

Thereafter, in a third stage, when the temperature of the battery cell is equal to or higher than the melting temperature of the adhesive A16b, the region adhered by the adhesive A16b is separated, and communication openings that allow the gaps to communicate with the outside of the heat transfer suppression sheet A110 are formed. As a result, the high-temperature steam staying inside the region of the adhesive A16b is released at once. Therefore, even when thermal runaway occurs in the battery cells, it is possible to effectively suppress the propagation of heat between the battery cells.

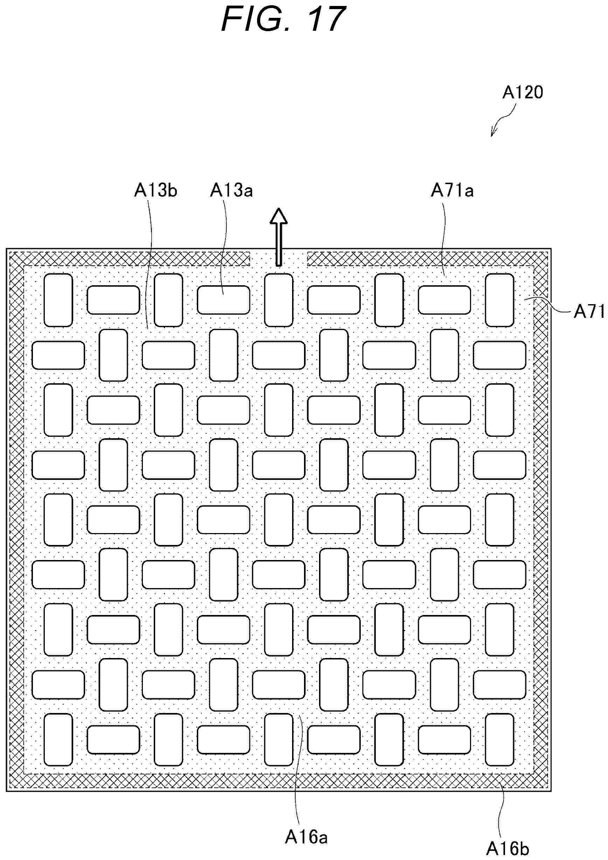

Fig. 17 is a plan view schematically showing another example of the heat transfer suppression sheet for a battery pack using two kinds of adhesives having different melting temperatures.

As shown in Fig. 17, in a heat transfer suppression sheet A120, the adhesive A16b having a higher melting temperature is used in the peripheral edges of the region of the convex portions A13b of the heat-insulating material A71, as in the heat transfer suppression sheet A110 shown in Fig. 16. However, the same adhesive A16a, which is used in the region inside the peripheral edges and has a lower melting temperature, is used only in part of the peripheral edges.

In the heat transfer suppression sheet A120 configured as described above, at a temperature lower than the melting temperature of the adhesive A16a in a first stage, the gaps between the concave portions A13a and the covering material are sealed. Therefore, as in the heat transfer suppression sheet A110 shown in Fig. 16, moisture is evaporated from the heat-insulating material A71 toward the gaps, and the heat-insulating material A71 loses the heat of vaporization and is cooled.

Thereafter, in a second stage, when the temperature of the battery cell further rises to be equal to or higher than the melting temperature of the adhesive A16a, the region adhered by the adhesive A16a is separated, and thus moisture is easily evaporated from the heat-insulating material A71. Since the adhesive A16a having a low melting temperature is used only in part of the peripheral edges, this region serves as a communication opening that allows the gaps to communicate with the outside of the heat transfer suppression sheet A110. Therefore, as shown by an arrow in Fig. 17, the high-temperature steam is released from the communication opening, and it is possible to effectively suppress the propagation of heat between the battery cells.

As shown in Fig. 17, when the same adhesive A16a, which is used in the region inside the peripheral edges and has a lower melting temperature, is used only in part of the peripheral edges, it is possible to easily control the position where the high-temperature steam (moisture) is released. Therefore, it is possible to prevent water exposure to predetermined parts in the battery pack.

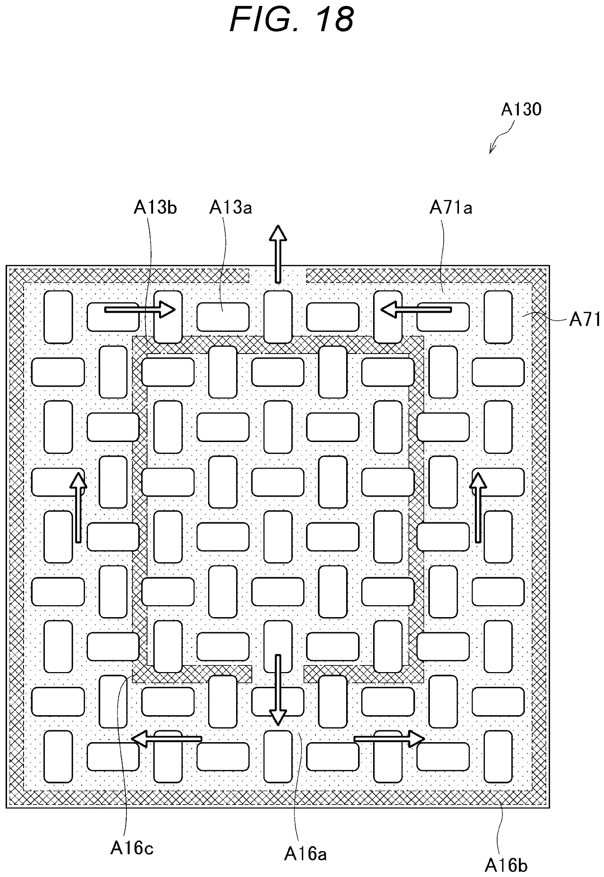

Fig. 18 is a plan view schematically showing still another example of the heat transfer suppression sheet for a battery pack using two kinds of adhesives having different melting temperatures.

As shown in Fig. 18, in a heat transfer suppression sheet A130, the adhesive A16b having a high melting temperature is used in the peripheral edges of the region of the convex portions A13b of the heat-insulating material A71, as in the heat transfer suppression sheet A120 shown in Fig. 17. However, the adhesive A16a having a low melting temperature is used only in part of the peripheral edges, and this region serves as a communication opening at a high temperature. An adhesive A16c having the same melting temperature as that of the adhesive A16b is used in a region separated at a predetermined interval from the peripheral edges inside the region in which the adhesive A16b is used. In the region where the adhesive A16c is used, the adhesive A16a having a low melting temperature is used in part of the opposite side of the region serving as the communication opening.

In the heat transfer suppression sheet A130 configured as described above, in a first stage, as in the heat transfer suppression sheet A120 shown in Fig. 17, moisture is evaporated from the heat-insulating material A71 toward the gaps, and the heat-insulating material A71 loses the heat of vaporization and is cooled.

Thereafter, when the adhesive A16a is melted in a second stage, a moisture release path is formed as shown by an arrow in Fig. 18. As a result, since the high-temperature steam moves along the release path and is released to the outside through the communication opening, the cooling effect can be further improved.

The adhesive A16a, the adhesive A16b, and the adhesive A16c may all have different melting temperatures, and the regions in which the respective adhesives are used can be freely determined according to the purpose.

As described above, the heat transfer suppression sheets A110, A120, and A130 shown in Figs. 16 to 18 are designed such that the adhesives melt stepwise in regions as the temperature of the battery cell rises.

Therefore, it is possible to adjust the timing at which the steam staying in the gaps is released, provide a steam release opening at any position, or provide a release path in a free manner.

To obtain the effects described above, the adhesives may melt stepwise in regions as the temperature rises, and in addition to the method of using adhesives having different melting temperatures, a method of applying the adhesive to regions in different application amounts can be used.

In Figs. 16 to 18, in the heat transfer suppression sheets in which the covering material is bonded to the surface and the back surface of the heat-insulating material A71, the case where the adhesive for bonding the heat-insulating material A71 to the covering material melts stepwise has been described, but the present invention is not limited thereto. For example, in a configuration in which the heat-insulating material A71 is completely covered with a covering material, a method of adjusting the melting temperature or the application amount of the adhesive depending on the region can also be applied. Specifically, in the case where the covering materials are bonded to each other in the vicinity of the end surfaces of the heat-insulating material A71, by setting a high melting temperature adhesive for bonding the covering materials to each other and a low melting temperature adhesive for bonding the heat-insulating material A71 to the covering material, the same effects as those of the heat transfer suppression sheet A110 can be obtained.

### <Thickness of Heat Transfer Suppression Sheet>

In the present embodiment, the thickness of the heat transfer suppression sheet is not particularly limited, but is preferably in a range of 0.05 mm to 6 mm. If the thickness of the heat transfer suppression sheet is less than 0.05 mm, sufficient mechanical strength cannot be imparted to the heat transfer suppression sheet. On the other hand, if the thickness of the heat transfer suppression sheet exceeds 6 mm, it may be difficult to form the heat transfer suppression sheet.

Next, a method for manufacturing the heat transfer suppression sheet for a battery pack according to the present embodiment will be described.

### <Method for Manufacturing Heat Transfer Suppression Sheet>

The heat-insulating material used in the heat transfer suppression sheet according to the present embodiment can be manufactured by molding a material containing at least one of inorganic particles or inorganic fibers by a dry molding method or a wet molding method, for example. As the dry molding method, for example, a press molding method (dry press molding method) and an extrusion molding method (dry extrusion molding method) can be used.

### (Method for Manufacturing Heat-insulating Material Using Dry Press Molding Method)

In the dry press molding method, inorganic particles and inorganic fibers, and, if necessary, organic fibers, organic binders, and the like are put into a mixer such as a V-shaped mixer at a predetermined ratio. Then, after the materials put into the mixer are sufficiently mixed, the mixture is put into a predetermined mold and press-molded to obtain a heat-insulating material. During press molding, heating may be performed as necessary.

A heat-insulating material having concave portions and convex portions can be formed by, for example, a pressing method using a mold having a concave and convex shape during press molding.

A press pressure during press molding is preferably in a range of 0.98 MPa or more and 9.80 MPa or less. If the press pressure is less than 0.98 MPa, the strength of the obtained heat-insulating material may not be secured and the heat-insulating material may collapse. On the other hand, if the press pressure exceeds 9.80 MPa, the workability may be deteriorated due to excessive compression, or due to an increase in the bulk density, solid heat transfer may increase and heat insulating properties may be decreased.

In the case of using the dry press molding method, it is preferable to use an ethylene-vinyl acetate copolymer (EVA) as the organic binder, but any organic binder that is generally used in the case of using the dry press molding method can be used without particular limitation.

### (Method for Manufacturing Heat-insulating Material Using Dry Extrusion Molding Method)

In the dry extrusion molding method, a paste is prepared by adding water to inorganic particles and inorganic fibers and, if necessary, organic fibers and organic binders as binders, followed by kneading the mixture with a kneader. Then, the obtained paste is extruded from a slit-shaped nozzle using an extruder and further dried to obtain a heat-insulating material. In the case of using the dry extrusion molding method, it is preferable to use methylcellulose, water-soluble cellulose ether, or the like as the organic binder, but any organic binder that is generally used in the case of using the dry extrusion molding method can be used without particular limitation.

For example, as a method for manufacturing the heat-insulating material A21 having concave portions and convex portions shown in Fig. 6 by the dry extrusion molding method, a method of extruding the above paste as a raw material from a slit-shaped nozzle having a desired groove shape can be exemplified.

For example, the concave portion A13a in the heat-insulating materials shown in Figs. 2, 7, 9, and 14 can be formed by a method such as extruding the above paste as a raw material from a slit-shaped nozzle and scraping a surface of a sheet before drying obtained by the extrusion to form desired concave portions.

### (Method for Manufacturing Heat-insulating Material Using Wet Molding Method)

In the wet molding method, inorganic particles and inorganic fibers, and, if necessary, organic binders as binders, are mixed in water, and stirred with a stirrer to prepare a mixed solution. Then, the obtained mixed solution is poured into a molding machine having a mesh for filtration formed on a bottom surface, and the mixed solution is dehydrated through the mesh, whereby a wet sheet is prepared. Thereafter, the obtained wet sheet is heated and pressurized, whereby a heat-insulating material can be obtained.

Before the heating and pressurizing step, a ventilation drying treatment may be performed in which hot air is passed through the wet sheet to dry the sheet, or the wet sheet may be heated and pressurized in a wet state without performing the ventilation drying treatment.

In the case of using the wet molding method, an acrylic emulsion using polyvinyl alcohol (PVA) can be selected as the organic binder.

Examples of the method for manufacturing a heat-insulating material having concave portions and convex portions by the wet molding method include a method of press-molding a wet sheet using a mold having a concave and convex shape before heating and pressurization.

### (Method for Manufacturing Covering Material)

As the covering material, the above polymer films or metal films of general purpose manufactured with a desired thickness can be used, and by press molding using a mold having a concave and convex shape, concave and convex portions can be formed on the films.

### (Method for Manufacturing Heat Transfer Suppression Sheet)

The heat transfer suppression sheet according to the present embodiment can be manufactured, for example, by applying an adhesive to the heat-insulating material or the covering material obtained as described above and bonding the heat-insulating material to the covering material.

Examples of a method of covering the entire heat-insulating material with the covering material include a method of sandwiching the heat-insulating material between two covering materials cut larger than a surface of the heat-insulating material and bonding the covering materials to each other by thermocompression bonding or an adhesive around the heat-insulating material.

### [A2. Battery Pack]

A battery pack according to the present embodiment is a battery pack in which battery cells are connected in series or in parallel, and the heat transfer suppression sheet for a battery pack according to the present embodiment is interposed between the battery cells. Specifically, for example, as shown in Fig. 3, in the battery pack A100, battery cells A20 are disposed side by side, connected in series or in parallel, and accommodated in the battery case A30, and the heat transfer suppression sheets A10 are interposed between the battery cells A20.

In such a battery pack A100, since the heat transfer suppression sheet A10 is interposed between the battery cells A20, the individual battery cells A20 can be cooled during normal use.

Even when one of the battery cells A20 has thermal runaway and reaches a high temperature, swells, or catches fire, due to the heat transfer suppression sheet A10 according to the present embodiment, the propagation of heat between the battery cells A20 can be suppressed. Therefore, the chain of thermal runaway can be prevented, and adverse effects on the battery cell A20 can be minimized.

Next, the "eighth embodiment" to the "tenth embodiment" relating to the "second invention group" will be described.

### [B1. Heat Transfer Suppression Sheet for Battery Pack]

Hereinafter, the heat transfer suppression sheet for a battery pack according to the present embodiment will be described in order from the eighth embodiment to the tenth embodiment. Then, other examples of the heat-insulating material according to the present embodiment, the heat-insulating material, the covering material, and the like constituting the heat transfer suppression sheet for a battery pack according to the present embodiment will be described. Further, a method for manufacturing the heat transfer suppression sheet for a battery pack according to the present embodiment will be described.

### <Eighth Embodiment>

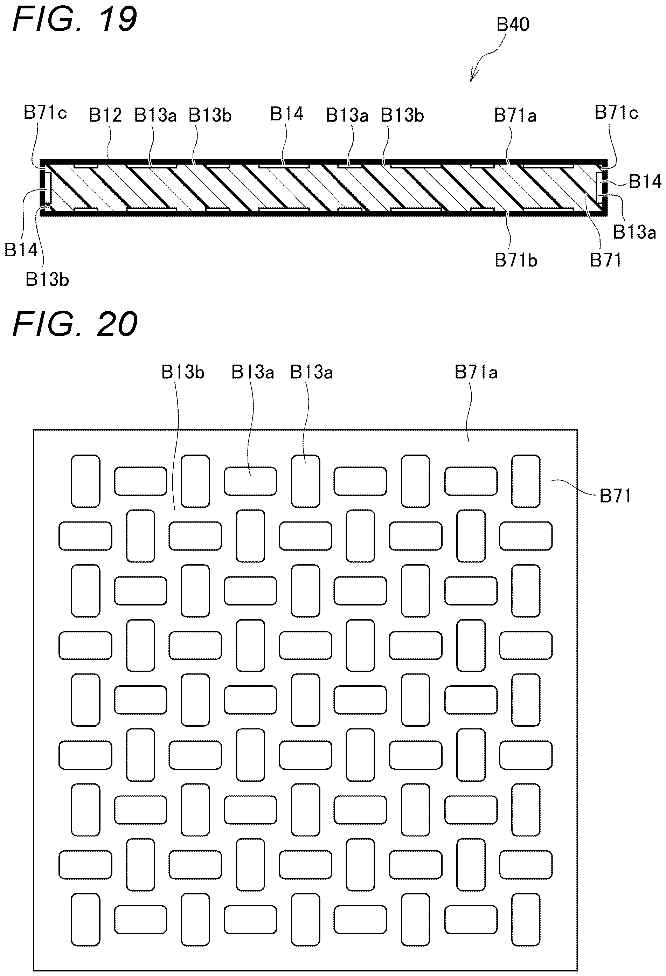

Fig. 19 is a cross-sectional view schematically showing a heat transfer suppression sheet for a battery pack according to the eighth embodiment. Fig. 20 is a plan view schematically showing a heat-insulating material used in the heat transfer suppression sheet for a battery pack according to the eighth embodiment. Hereinafter, a heat transfer suppression sheet B40 for a battery pack may be simply referred to as a heat transfer suppression sheet B40.

The heat transfer suppression sheet B40 for a battery pack according to the present embodiment includes a heat-insulating material B71, and a covering material B12 covering a surface B71a and a back surface B71b which are main surfaces of the heat-insulating material B71. In the present embodiment, the covering material B12 completely covers the heat-insulating material B71. As will be described later, when the heat transfer suppression sheet B40 and battery cells are laminated, the surface B71a and the back surface B71b of the heat-insulating material B71 refer to surfaces facing the battery cells, and end surfaces B71c refer to four surfaces parallel to a thickness direction of the heat transfer suppression sheet B40.

The heat-insulating material B71 contains, for example, inorganic fibers and inorganic particles containing crystal water or adsorbed water, and the crystal water or the adsorbed water has the property of releasing moisture when heated. As shown in Figs. 19 and 20, concave portions B13a are regularly formed on the surface B71a of the heat-insulating material B71, and a region where the concave portions B13a are not formed substantially constitutes convex portions B13b.

The concave portions B 13a have, for example, a rectangular shape in a plan view, and as shown in Fig. 20, concave portions whose longitudinal directions are parallel to one side of the heat-insulating material B71 and concave portions whose longitudinal directions are perpendicular to one side of the heat-insulating material B71 are alternately disposed.

The covering material B12 is, for example, a polymer film, and the convex portion B13b of the heat-insulating material B71 is bonded to the covering material B12 with an adhesive (not shown) made of an organic substance or an inorganic substance.

Since the region where the concave portions B 13a are formed is not in contact with the covering material B12, as a result, gaps B14 are formed between the heat-insulating material B71 and the covering material B12. The covering material B12 completely covers the heat-insulating material B71.

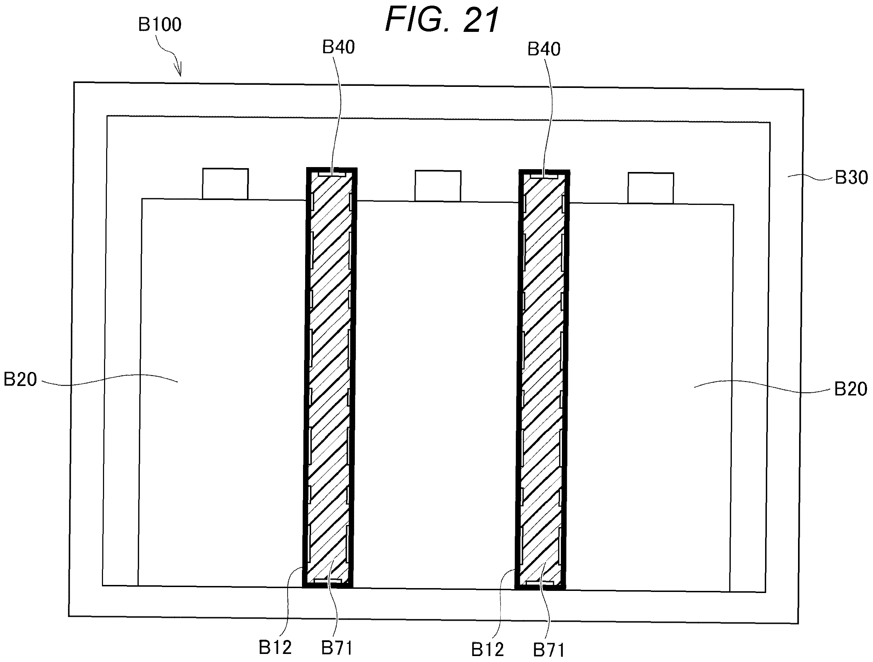

Fig. 21 is a cross-sectional view schematically showing a battery pack to which the heat transfer suppression sheet for a battery pack according to the eighth embodiment is applied. A battery pack B 100 includes a battery case B30, battery cells B20 housed in the battery case B30, and the heat transfer suppression sheets B40 interposed between the battery cells B20. The battery cells B20 are connected in series or in parallel by a bus bar (not shown) or the like.

For example, the battery cell B20 is preferably a lithium-ion secondary battery, but is not particularly limited thereto, and may be applied to other secondary batteries.

In the heat transfer suppression sheet B40 configured as described above, when the temperature rises in a relatively low-temperature range from room temperature (about 20°C) to about 150°C, which is a temperature range of the battery cell B20 during normal use, heat is also propagated to the heat-insulating material B71. In the present embodiment, since the heat-insulating material B71 contains inorganic particles containing crystal water or adsorbed water, and the crystal water or the adsorbed water is a material that releases moisture when heated, moisture is evaporated from the inorganic particles when the heat-insulating material B71 is heated. Then, the evaporated moisture stays in the gap part B14. At this time, since the heat-insulating material B71 loses the heat of vaporization and is cooled, the heat transfer suppression sheet B40 can effectively cool the battery cell B20.

When the use (that is, charge and discharge) of the battery pack B100 is stopped after the battery cell B20 is effectively cooled, the water vapor staying in the gap B14 is cooled and forms water droplets, which are absorbed into the heat-insulating material B71 over time. Then, when the battery pack B100 is used next time, the moisture in the heat-insulating material B71 is evaporated again, the heat-insulating material B71 loses the heat of vaporization, and the cycle of cooling the battery cell B20 is repeated.

As described above, in the present embodiment, since the heat-insulating material B71 is completely covered with the covering material B12, and most of the evaporated moisture is again absorbed into the heat-insulating material B71, it is possible to maintain the effect of cooling the battery cell B20 for a long period of time during normal use.

### <Ninth Embodiment>

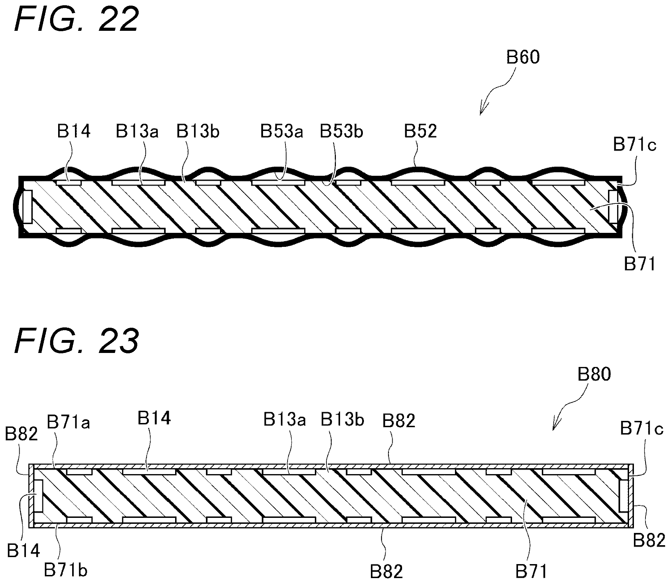

Fig. 22 is a cross-sectional view schematically showing a heat transfer suppression sheet for a battery pack according to the ninth embodiment.

In Figs. 22 and 23 showing the following ninth to tenth embodiments, the same or equivalent parts as those in the eighth embodiment are denoted by the same reference numerals in the drawings, and the description thereof is omitted or simplified. Since all the embodiments described below can be used in place of the heat transfer suppression sheet B40 described in the battery pack B100 shown in Fig. 21, effects and the like will be described assuming that heat transfer suppression sheets according to the ninth and tenth embodiments are applied to the battery pack B100.

A heat transfer suppression sheet B60 for a battery pack according to the ninth embodiment includes the heat-insulating material B71 and the covering material B12 that completely covers the heat-insulating material B71. That is, the covering material B12 formed in a bag shape with an adhesive (not shown) or the like covers the entire surface of the heat-insulating material B71, and the heat-insulating material B71 is completely sealed by the covering material B12.

In the present embodiment, the concave portions B13a and the convex portions B13b are formed in the heat-insulating material B71. On a surface facing the heat-insulating material B71 in the covering material, concave portions B53a recessed in a direction away from the heat-insulating material B71 and convex portions B53b having a shape protruding toward the heat-insulating material B71 are also formed. The convex portions B53b of the covering material B52 is bonded to the convex portions B13b of the heat-insulating material B71 with an adhesive (not shown), and the gaps B14 are formed between the concave portions B53a of the covering material B52 and the concave portions B13a of the heat-insulating material B71.

In the heat transfer suppression sheet B60 configured as described above, the same effects as those of the eighth embodiment can also be obtained during normal use and when an abnormality occurs. Since the gap B14 is formed by the concave portion B13a and the concave portion B53a, a volume of the gap B14 is increased as compared with the heat transfer suppression sheet B40 for a battery pack according to the eighth embodiment. Therefore, the adsorbed water or hydrated water becomes steam and is easily evaporated from the heat-insulating material B71, and the effect of cooling the battery cell B20 can be further improved during normal use.

### <Tenth Embodiment>

Fig. 23 is a cross-sectional view schematically showing a heat transfer suppression sheet for a battery pack according to the tenth embodiment.

In a heat transfer suppression sheet B80 for a battery pack according to the tenth embodiment, the surface B71a, the back surface B71b, and the end surfaces B71c of the heat-insulating material B71 are covered with a covering material (metal plate) B82 made of metal. That is, the covering material B82 completely covers and seals the heat-insulating material B71.

In the heat transfer suppression sheet B80 configured as described above, the same effects as those of the eighth and ninth embodiments can also be obtained during normal use.

The heat transfer suppression sheets for a battery pack according to the eighth to tenth embodiments have been described in order. In the eighth to tenth embodiments, an example using the heat-insulating material B71 shown in Fig. 20 has been given, but the shape of the heat-insulating material is not particularly limited. For example, even in the case where no concave portions or convex portions are formed in the heat-insulating material, when the concave portions and the convex portions are formed in the covering material, the gaps are formed between the heat-insulating material and the covering material, and therefore, the same effects as those of the eighth to tenth embodiments can be obtained.

Next, another example of the heat-insulating material used in the heat transfer suppression sheets for a battery pack according to the eighth to tenth embodiments will be described.

### <Another Example of Heat-insulating Material>

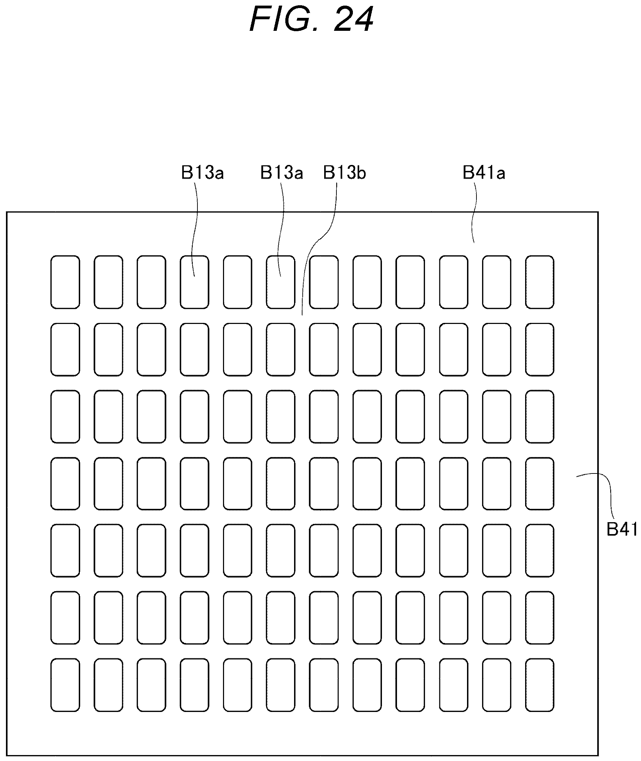

Figs. 24 to 28 are plan views schematically showing other examples of the heat-insulating material used in the heat transfer suppression sheets for a battery pack according to the eighth to tenth embodiments.

As shown in Fig. 24, concave portions B13a are regularly formed on a surface B41a of a heat-insulating material B41, and a region where the concave portions B13a are not formed substantially constitutes the convex portions B13b.

In the present embodiment, the concave portions B 13a have, for example, a rectangular shape in a plan view, and all the concave portions B13a are disposed such that longitudinal directions thereof are parallel to one side of the heat-insulating material B41.

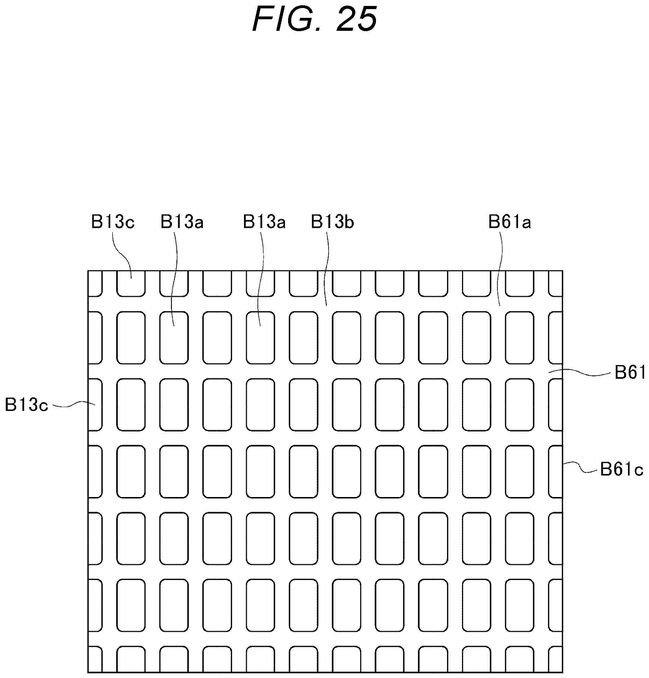

As shown in Fig. 25, concave portions B13a are regularly formed on a surface B61a of a heat-insulating material B61, and a region where the concave portions B13a are not formed substantially constitutes the convex portions B 13b. However, unlike the heat-insulating material B41 shown in Fig. 6, concave portions B 13c formed in the vicinity of end surfaces B61c of the heat-insulating material B61 reaches the end surfaces B61c of the heat-insulating material B61.

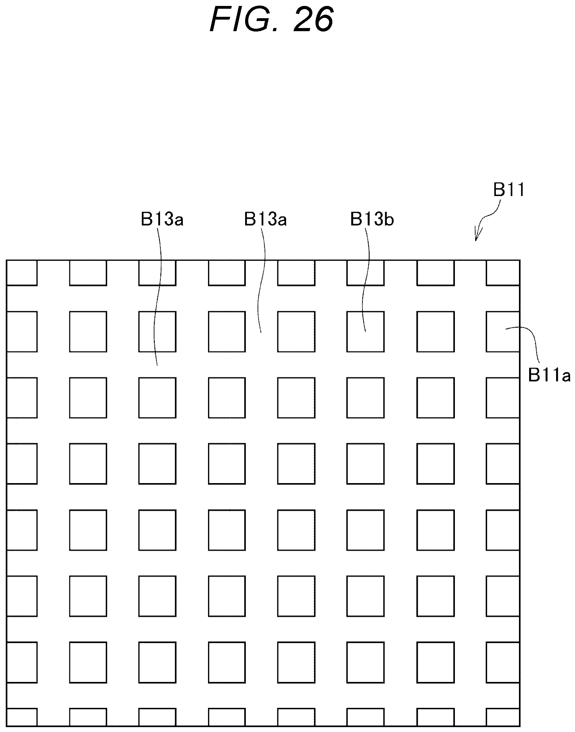

As shown in Fig. 26, on a surface B11a of the heat-insulating material B11, groove-shaped concave portions B13a are formed at equal intervals to cross in two directions parallel to two pairs of sides of the heat-insulating material B11. A region where the concave portions B13a are not formed substantially constitutes the convex portions B 13b.

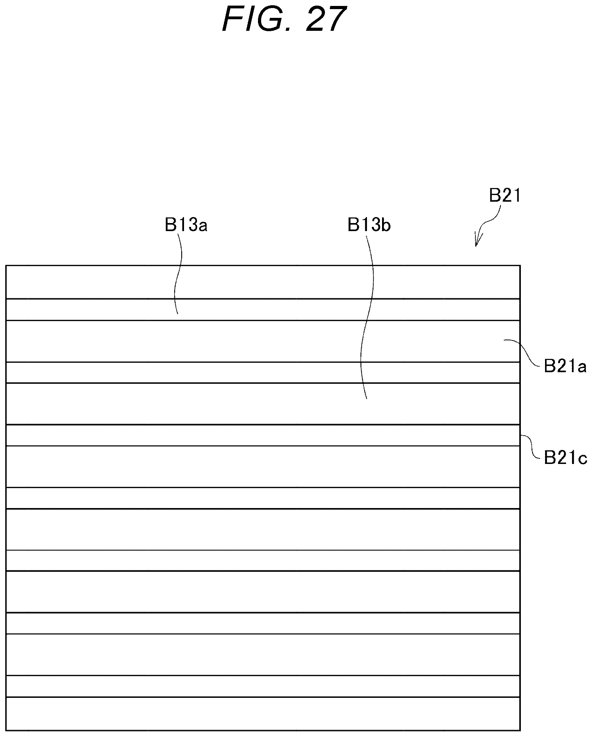

As shown in Fig. 27, groove-shaped concave portions B13a extending in a direction parallel to one side of the heat-insulating material B21 and having both ends reaching end surfaces B21c are formed at equal intervals on a surface B21a of a heat-insulating material B21, and a region where the concave portions B13a are not formed substantially constitutes the convex portions B 13b.

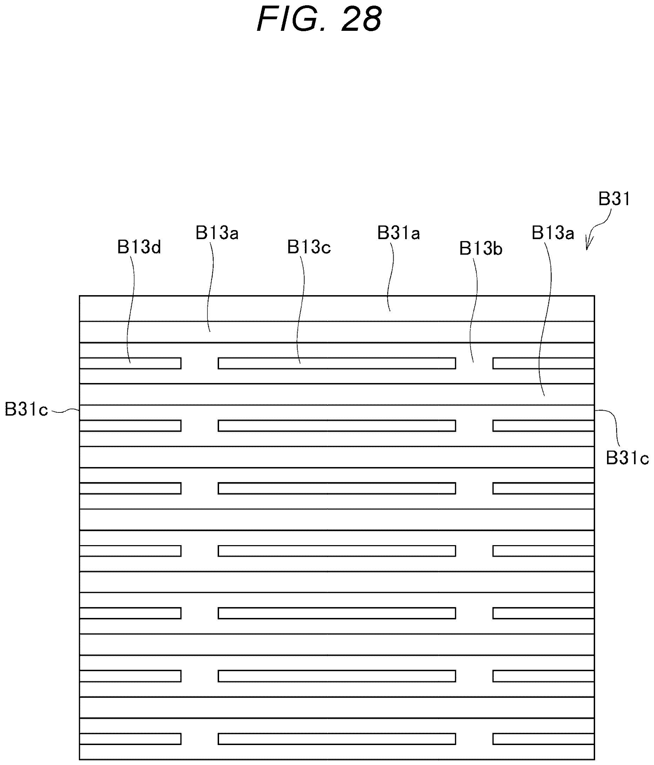

As shown in Fig. 28, groove-shaped concave portions B13a extending in one direction are regularly formed on a surface B31a of a heat-insulating material B31, and both end portions of the concave portion B13a reach a pair of end surfaces B31c facing each other of the heat-insulating material B31. The groove-shaped concave portion B 13c and groove-shaped concave portions B 13d extending in the same direction as the concave portion B13a are formed between the adjacent concave portions B13a. Both end portions of the concave portion B13c do not reach the end surface B31c of the heat-insulating material B31, and when a covering material is bonded to the surface B31a of the heat-insulating material B31, a gap formed between the concave portion B13c and the covering material does not communicate with the outside of the heat transfer suppression sheet.

In the concave portion B13d, one end portion reaches the end surface B31c of the heat-insulating material B31, and the other end portion does not reach the end surface B31c of the heat-insulating material B31.

The examples of the heat-insulating materials having various concave portions and convex portions have been described above, and when any of the heat-insulating materials is used, the heat-insulating material can be applied to the heat transfer suppression sheets for a battery pack according to the eighth to tenth embodiments, and the same effects as those of the eighth to tenth embodiments can be obtained.

Next, the heat-insulating material, the covering material, the adhesive constituting the heat transfer suppression sheet for a battery pack according to the present embodiment and the thickness of the heat transfer suppression sheet will be described in detail.

### <Heat-insulating Material>

The heat-insulating material used in the heat transfer suppression sheet for a battery pack according to the present embodiment contains at least one of inorganic particles or inorganic fibers.

The inorganic particles are preferably inorganic hydrates or hydrous porous materials. The inorganic hydrates receive heat from the battery cell B20, thermally decompose when the temperature is equal to or higher than a thermal decomposition start temperature, and release crystal water thereof, thereby cooling the battery cell B20. The inorganic hydrates form porous bodies after releasing the crystal water, and an effective heat insulation effect can be obtained due to a large number of air holes.

As the inorganic particles, a single kind of inorganic particles may be used, or two or more kinds of inorganic hydrate particles may be used in combination. Since the inorganic hydrates have different thermal decomposition start temperatures depending on their kinds, the battery cell B20 can be cooled in multiple stages by using two or more kinds of inorganic hydrate particles in combination.

Specific examples of the inorganic hydrates include aluminum hydroxide (Al(OH)₃), magnesium hydroxide (Mg(OH)₂), calcium hydroxide (Ca(OH)₂), zinc hydroxide (Zn(OH)₂), iron hydroxide (Fe(OH)₂), manganese hydroxide (Mn(OH)₂), zirconium hydroxide (Zr(OH)₂), gallium hydroxide (Ga(OH)₃), and the like.

Examples of the fibrous inorganic hydrates include fibrous calcium silicate hydrates.

Specific examples of the hydrous porous materials include zeolite, kaolinite, montmorillonite, acid clay, diatomaceous earth, sepiolite, wet silica, dry silica, aerogel, mica, vermiculite, and the like.

Further, examples of the inorganic fibers include alumina fibers, silica fibers, alumina silicate fibers, rock wool, magnesium silicate fibers, alkaline earth silicate fibers, glass fibers, zirconia fibers, potassium titanate fibers, and the like. Among these inorganic fibers, magnesium silicate fibers can be suitably used as a material that releases moisture when heated.

As the inorganic fibers, a single kind of inorganic fibers may be used, or two or more kinds of inorganic fibers may be used in combination.

In addition to the inorganic particles and the inorganic fibers, organic fibers, organic binders, or the like may be blended into the heat-insulating material as necessary. The organic fibers and the organic binders are useful for reinforcing the heat-insulating material and improving the moldability thereof.

The inorganic particles and the inorganic fibers contained in the heat-insulating material do not necessarily contain a material that releases moisture when heated. During the manufacture of the heat-insulating material, a small amount of moisture is inevitably contained, and therefore, in the case where the temperature of the battery cell B20 rises during normal use and when an abnormality occurs, the moisture contained in the heat-insulating material evaporates, thereby obtaining an effect of cooling the battery cell B20.

In the present embodiment, the heat-insulating material may contain at least one of the inorganic particles or the inorganic fibers, and with respect to a total mass of the heat transfer suppression sheet, a content of the inorganic particles is preferably 20% or more by mass and 80% or less by mass, and a content of the inorganic fibers is preferably 5% or more by mass and 70% or less by mass. By setting the contents as described above, the shape retention, the pressing force resistance, and the wind pressure resistance can be improved by the inorganic fibers, and the retention capacity of the inorganic particles can be secured.

Organic fibers, organic binders, or the like may be blended into the heat transfer suppression sheet according to the present embodiment as necessary. The organic fibers and the organic binders are useful for reinforcing the heat transfer suppression sheet and improving the moldability thereof.

### <Covering Material>

As the covering material, a polymer film or a metal film (metal plate) can be used.

Examples of the polymer film include polyimide, polycarbonate, PET, p-phenylene sulfide, polyetherimide, cross-linked polyethylene, flame-retardant chloroprene rubber, polyvinylidene fluoride, rigid vinyl chloride, polybutylene terephthalate, PTFE, PFA, FEP, ETFE, rigid PCV, flame-retardant PET, polystyrene, polyether sulfone, polyamide-imide, polyacrylonitrile, polyethylene, polypropylene, polyamide, and the like.

### Examples of the metal film include aluminum foil, stainless steel foil, and copper foil.

### <Adhesive>

In the present embodiment, an adhesive can be used as a method of bonding the heat-insulating material to the covering material and a method of bonding the covering materials to each other.

Examples of the adhesive include those using urethane, polyethylene, polypropylene, polystyrene, nylon, polyester, vinyl chloride, vinylon, acrylic resin, silicone, and the like as a raw material.

Examples of the method of covering the entire heat-insulating material with the covering material include lamination (dry lamination, thermal lamination), pouch lamination, vacuum packaging, vacuum lamination, shrink packaging, and caramel packaging.

### <Thickness of Heat Transfer Suppression Sheet>

In the present embodiment, the thickness of the heat transfer suppression sheet is not particularly limited, but is preferably in a range of 0.05 mm to 6 mm. If the thickness of the heat transfer suppression sheet is less than 0.05 mm, sufficient mechanical strength cannot be imparted to the heat transfer suppression sheet. On the other hand, if the thickness of the heat transfer suppression sheet exceeds 6 mm, it may be difficult to form the heat transfer suppression sheet.

Next, a method for manufacturing the heat transfer suppression sheet for a battery pack according to the present embodiment will be described.

### <Method for Manufacturing Heat Transfer Suppression Sheet>

The heat-insulating material used in the heat transfer suppression sheet according to the present embodiment can be manufactured by molding a material containing at least one of inorganic particles or inorganic fibers by a dry molding method or a wet molding method, for example. As the dry molding method, for example, a press molding method (dry press molding method) and an extrusion molding method (dry extrusion molding method) can be used.

### (Method for Manufacturing Heat-insulating Material Using Dry Press Molding Method)

In the dry press molding method, inorganic particles and inorganic fibers, and, if necessary, organic fibers, organic binders, and the like are put into a mixer such as a V-shaped mixer at a predetermined ratio. Then, after the materials put into the mixer are sufficiently mixed, the mixture is put into a predetermined mold and press-molded to obtain a heat-insulating material. During press molding, heating may be performed as necessary.

A heat-insulating material having concave portions and convex portions can be formed by, for example, a pressing method using a mold having a concave and convex shape during press molding.

A press pressure during press molding is preferably in a range of 0.98 MPa or more and 9.80 MPa or less. If the press pressure is less than 0.98 MPa, the strength of the obtained heat-insulating material may not be secured and the heat-insulating material may collapse. On the other hand, if the press pressure exceeds 9.80 MPa, the workability may be deteriorated due to excessive compression, or solid heat transfer may increase due to an increase in the bulk density, resulting in a reduction in heat insulating properties.

In the case of using the dry press molding method, it is preferable to use an ethylene-vinyl acetate copolymer (EVA) as the organic binder, but any organic binder that is generally used in the case of using the dry press molding method can be used without particular limitation.

### (Method for Manufacturing Heat-insulating Material Using Dry Extrusion Molding Method)

In the dry extrusion molding method, a paste is prepared by adding water to inorganic particles and inorganic fibers and, if necessary, organic fibers and organic binders as binders, followed by kneading the mixture with a kneader. Then, the obtained paste is extruded from a slit-shaped nozzle using an extruder and further dried to obtain a heat-insulating material. In the case of using the dry extrusion molding method, it is preferable to use methylcellulose, water-soluble cellulose ether, or the like as the organic binder, but any organic binder that is generally used in the case of using the dry extrusion molding method can be used without particular limitation.

Examples of the method for manufacturing the heat-insulating material having concave portions and convex portions by the dry extrusion molding method include a method of scraping a surface of a sheet before drying obtained by the extrusion from a slit-shaped nozzle into a desired concave and convex shape.

### (Method for Manufacturing Heat-insulating Material Using Wet Molding Method)

In the wet molding method, inorganic particles and inorganic fibers, and, if necessary, organic binders as binders, are mixed in water, and stirred with a stirrer to prepare a mixed solution. Then, the obtained mixed solution is poured into a molding machine having a mesh for filtration formed on a bottom surface, and the mixed solution is dehydrated through the mesh, whereby a wet sheet is prepared. Thereafter, the obtained wet sheet is heated and pressurized, whereby a heat-insulating material can be obtained.

Before the heating and pressurizing step, a ventilation drying treatment may be performed in which hot air is passed through the wet sheet to dry the sheet, or the wet sheet may be heated and pressurized in a wet state without performing the ventilation drying treatment.

In the case of using the wet molding method, an acrylic emulsion using polyvinyl alcohol (PVA) can be selected as the organic binder.

Examples of the method for manufacturing a heat-insulating material having concave portions and convex portions by the wet molding method include a method of press-molding a wet sheet using a mold having a concave and convex shape before heating and pressurization.

### (Method for Manufacturing Covering Material)

Examples of the method for manufacturing the covering material having concave portions and convex portions include a method in which the above polymer films or metal films of general purpose manufactured with a desired thickness can be used, and press molding is performed using a mold having a concave and convex shape.

### (Method for Manufacturing Heat Transfer Suppression Sheet)

The heat transfer suppression sheet according to the present embodiment can be manufactured by, for example, sandwiching a heat-insulating material between two covering materials cut larger than a surface of the heat-insulating material, and bonding the covering materials to each other by thermocompression bonding or an adhesive around the heat-insulating material.

### [B2. Battery Pack]

A battery pack according to the present embodiment is a battery pack in which battery cells are connected in series or in parallel, and the heat transfer suppression sheet for a battery pack according to the present embodiment is interposed between the battery cells. Specifically, for example, as shown in Fig. 21, in the battery pack B100, battery cells B20 are disposed side by side, connected in series or in parallel, and accommodated in the battery case B30, and for example, the heat transfer suppression sheets B40 are interposed between the battery cells B20.

In such a battery pack B100, since the heat transfer suppression sheet B40 is interposed between the battery cells B20, the individual battery cells B20 can be cooled during normal use.

Even when one of the battery cells B20 has thermal runaway and reaches a high temperature, swells, or catches fire, due to the heat transfer suppression sheet B40 according to the present embodiment, the propagation of heat between the battery cells B20 can be suppressed. Therefore, the chain of thermal runaway can be prevented, and adverse effects on the battery cell B20 can be minimized.

Although various embodiments have been described above with reference to the drawings, it is needless to say that the present invention is not limited to such examples. It is apparent to those skilled in the art that various changes and modifications can be conceived within the scope of the claims, and it is understood that such changes and modifications are also encompassed within the technical scope of the present invention.

### REFERENCE SIGNS LIST

A10, A50, A60, A70, A80, A90, A95, A110, A120, A130 heat transfer suppression sheet for battery pack
A11, A21, A31, A41, A51, A61, A71 heat-insulating material
A12, A52 covering material
A13a, A13c, A53a concave portion
A13b, A53b convex portion
A14 gap
A15 communication opening
A20 battery cell
A30 battery case
A100 battery pack
B40, B60, B80 heat transfer suppression sheet for battery pack
B11, B21, B31, B41, 71 heat-insulating material
B12, B52, B82 covering material
13a, B13c, B13d concave portion
B13b convex portion
B14 gap
B20 battery cell
B30 battery case
B100 battery pack

## Claims

1. A heat transfer suppression sheet (A50; A60; A90; A95; A110; A120; A130; B60) for a battery pack (A100; B100), the heat transfer suppression sheet (A50; A60; A90; A95; A110; A120; A130; B60) being used in a battery pack (A100; B100) in which battery cells (A20; B20) are connected in series or in parallel, and being interposed between the battery cells (A20; B20), the heat transfer suppression sheet (A50; A60; A90; A95; A110; A120; A130; B60) comprising:
a heat-insulating material (A11; A21; A31; A41; A51; A61; A71; B11; B21; B31; B41; B61; B71) containing at least one of inorganic particles or inorganic fibers; and
a covering material (A52; B52) covering at least a part of the heat-insulating material (A11; A21; A31; A41; A51; A61; A71; B11; B21; B31; B41; B61; B71), wherein
a gap (A14; B14) is formed between the heat-insulating material (A11; A21; A31; A41; A51; A61; A71; B11; B21; B31; B41; B61; B71) and the covering material (A52; B52), wherein
the covering material (A52; B52) has a concave portion (A53a; B53a) and a convex portion (A53b; B53b) on the surface facing the heat-insulating material (A11; A21; A31; A41; A51; A61; A71; B11; B21; B31; B41; B61; B71),
the gap (A14; B14) is formed between the concave portion (A53a; B53a) and the heat-insulating material (A11; A21; A31; A41; A51; A61; A71; B11; B21; B31; B41; B61; B71), and
the gap (A14; B14) communicates with the outside of the heat-insulating material (A11; A21; A31; A41; A51; A61; A71; B11; B21; B31; B41; B61; B71) and the covering material (A52; B52).

2. The heat transfer suppression sheet (A50; A60; A90; A95; A110; A120; A130; B60) for a battery pack (A100; B100) according to claim 1, wherein
the convex portion (A53b; B53b) of the covering material (A52; B52) is bonded to the heat-insulating material (A11; A21; A31; A41; A51; A61; A71; B11; B21; B31; B41; B61; B71).

3. The heat transfer suppression sheet (A60; A95; A110; A120; A130; B60) for a battery pack (A100; B100) according to claim 1, wherein
the heat-insulating material (A11; A21; A31; A41; A61; A71; B11; B21; B31; B41; B61; B71) has a concave portion (A13a, A13c, A13d; B13a, B13c, B13d) and a convex portion (A13b; B13b) on a surface facing the covering material (A52; B52).

4. The heat transfer suppression sheet (A60; A95; A110; A120; A130; B60) for a battery pack (A100; B100) according to claim 3, wherein
the gap (A14; B14) is formed between the concave portion (A13a, A13c, A13d; B13a, B13c, B13d) of the heat-insulating material (A11; A21; A31; A41; A61; A71; B11; B21; B31; B41; B61; B71) and the concave portion (A53a; B53a) of the covering material (A52; B52).

5. The heat transfer suppression sheet (A60; A95; A110; A120; A130; B60) for a battery pack (A100; B100) according to claim 4, wherein
the convex portion (A13b; B13b) of the heat-insulating material (A11; A21; A31; A41; A61; A71; B11; B21; B31; B41; B61; B71) is bonded to the convex portion (A53b; B53b) of the covering material (A52; B52).

6. The heat transfer suppression sheet (A50; A60; A90; A95; A110; A120; A130; B60) for a battery pack (A100; B100) according to any one of claims 1 to 4, wherein
the covering material (A52; B52) is formed of an embossed polymer film or a metal plate.

7. The heat transfer suppression sheet (A50; A60; A90; A95; A110; A120; A130; B60) for a battery pack (A100; B100) according to any one of claims 1 to 6, wherein
the gap (A14; B14) is sealed at a temperature of less than 60°C, and
the covering material (A52; B52) is configured such that a communication opening (A15) that allows the gap (A14; B14) to communicate with the outside of the covering material (A52; B52) is formed at a temperature of 60°C or more, wherein the covering material (A52; B52) is a polymer film that melts at a temperature of 60°C or more.

8. The heat transfer suppression sheet (A50; A60; A90; A95; A110; A120; A130; B60) for a battery pack (A100; B100) according to any one of claims 1 to 6, wherein
the gap (A14; B14) is sealed at a temperature of less than 60°C, and
the covering material (A52; B52) is configured such that a communication opening (A15) that allows the gap (A14; B14) to communicate with the outside of the covering material (A52; B52) is formed at a temperature of 60°C or more, wherein
the heat-insulating material (A11; A21; A31; A41; A51; A61; A71; B11; B21; B31; B41; B61; B71) is bonded to the covering material (A52; B52) with an adhesive (A16a, A16b, A16c) that melts at a temperature of 60°C or more and when the adhesive (A16a, A16b, A16c) has melted, the communication opening (A15) is formed, or
a number of the covering material (A52; B52) being two or more, the covering materials (A52; B52) are bonded to each other with an adhesive (A16a, A16b, A16c) that melts at a temperature of 60°C or more and when the adhesive (A16a, A16b, A16c) has melted, the communication opening (A15) is formed.

9. The heat transfer suppression sheet (A110; A120; A130) for a battery pack (A100; B100) according to claim 8, wherein
adhesives (A16a, A16b, A16c) having different melting temperatures are used as the adhesive (A16a, A16b, A16c) in regions such that the adhesives (A16a, A16b, A16c) melt stepwise in the regions as the temperature rises.

10. The heat transfer suppression sheet (A110; A120; A130) for a battery pack (A100; B100) according to claim 8, wherein
the adhesive (A16a, A16b, A16c) is applied to regions in different application amounts such that the adhesive (A16a, A16b, A16c) melts stepwise in the regions as the temperature rises.

11. The heat transfer suppression sheet (A95; B60) for a battery pack (A100; B100) according to any one of claims 1 to 10, wherein
the covering material (A52; B52) completely covers the heat-insulating material (A71; B71).

12. The heat transfer suppression sheet (A95; B60) for a battery pack (A100; B100) according to claim 11, wherein
at least one of the inorganic particles or the inorganic fibers contained in the heat-insulating material (A71; B71) contains a material that releases moisture when heated.

13. A battery pack (A100; B100) in which battery cells (A20; B20) are connected in series or in parallel, wherein
the heat transfer suppression sheet (A50; A60; A90; A95; A110; A120; A130; B60) for a battery pack (A100; B100) according to any one of claims 1 to 12 is interposed between the battery cells (A20; B20).

## Patentansprüche

1. Wärmeübertragungsunterdrückungsfolie (A50, A60, A90, A95, A110, A120, A130, B60) für einen Batteriepack (A100, B100), wobei die Wärmeübertragungsunterdrückungsfolie (A50, A60, A90, A95, A110, A120, A130, B60) in einem Batteriepack (A100, B100) verwendet wird, in dem Batteriezellen (A20, B20) in Reihe oder parallel geschaltet sind, und zwischen den Batteriezellen (A20, B20) eingefügt ist, wobei die Wärmeübertragungsunterdrückungsfolie (A50, A60, A90, A95, A110, A120, A130, B60) umfasst:
ein wärmeisolierendes Material (A11, A21, A31, A41, A51, A61, A71, B11, B21, B31, B41, B61, B71), das mindestens eines von anorganischen Partikeln oder anorganischen Fasern enthält, und
ein Abdeckmaterial (A52, B52), das mindestens einen Teil des wärmeisolierenden Materials (A11, A21, A31, A41, A51, A61, A71, B11, B21, B31, B41, B61, B71) abdeckt, wobei
ein Spalt (A14, B14) zwischen dem wärmeisolierenden Material (A11, A21, A31, A41, A51, A61, A71, B11, B21, B31, B41, B61, B71) und dem Abdeckmaterial (A52, B52) gebildet ist,
wobei das Abdeckmaterial (A52, B52) einen konkaven Abschnitt (A53a, B53a) und einen konvexen Abschnitt (A53b, B53b) auf der dem wärmeisolierenden Material (A11, A21, A31, A41, A51, A61, A71, B11, B21, B31, B41, B61, B71) zugwandten Oberfläche aufweist,
der Spalt (A14, B14) zwischen dem konkaven Abschnitt (A53a, B53a) und dem wärmeisolierenden Material (A11, A21, A31, A41, A51, A61, A71, B11, B21, B31, B41, B61, B71) gebildet ist und
der Spalt (A14, B14) mit der Außenseite des wärmeisolierenden Materials (A11, A21, A31, A41, A51, A61, A71, B11, B21, B31, B41, B61, B71) und des Abdeckmaterials (A52, B52) in Verbindung steht.

2. Wärmeübertragungsunterdrückungsfolie (A50, A60, A90, A95, A110, A120, A130, B60) für einen Batteriepack (A100, B100) gemäß Anspruch 1, wobei
der konvexe Abschnitt (A53b, B53b) des Abdeckmaterials (A52, B52) mit dem wärmeisolierenden Material (A11, A21, A31, A41, A51, A61, A71, B11, B21, B31, B41, B61, B71) verbunden ist.

3. Wärmeübertragungsunterdrückungsfolie (A60, A95, A110, A120, A130, B60) für einen Batteriepack (A100, B100) gemäß Anspruch 1, wobei
das wärmeisolierende Material (A11, A21, A31, A41, A61, A71, B11, B21, B31, B41, B61, B71) einen konkaven Abschnitt (A13a, A13c, A13d, B13a, B13c, B13d) und einen konvexen Abschnitt (A13b, B13b) auf einer dem Abdeckmaterial (A52, B52) zugewandten Oberfläche aufweist.

4. Wärmeübertragungsunterdrückungsfolie (A60, A95, A110, A120, A130, B60) für einen Batteriepack (A100, B100) gemäß Anspruch 3, wobei
der Spalt (A14, B14) zwischen dem konkaven Abschnitt (A13a, A13c, A13d, B13a, B13c, B13d) des wärmeisolierenden Materials (A11, A21, A31, A41, A61, A71, B11, B21, B31, B41, B61, B71) und dem konkaven Abschnitt (A53a, B53a) des Abdeckmaterials (A52, B52) gebildet ist.

5. Wärmeübertragungsunterdrückungsfolie (A60, A95, A110, A120, A130, B60) für einen Batteriepack (A100, B100) gemäß Anspruch 4, wobei
der konvexe Abschnitt (A13b, B13b) des wärmeisolierenden Materials (A11, A21, A31, A41, A61, A71, B11, B21, B31, B41, B61, B71) mit dem konvexen Abschnitt (A53b, B53b) des Abdeckmaterials (A52, B52) verbunden ist.

6. Wärmeübertragungsunterdrückungsfolie (A50, A60, A90, A95, A110, A120, A130, B60) für einen Batteriepack (A100, B100) gemäß einem der Ansprüche 1 bis 4, wobei
das Abdeckmaterial (A52, B52) aus einem geprägten Polymerfilm oder einer Metallplatte gebildet ist.

7. Wärmeübertragungsunterdrückungsfolie (A50, A60, A90, A95, A110, A120, A130, B60) für einen Batteriepack (A100, B100) gemäß einem der Ansprüche 1 bis 6, wobei
der Spalt (A14, B14) bei einer Temperatur von weniger als 60°C abgedichtet wird und
das Abdeckmaterial (A52, B52) so konfiguriert ist, dass eine Verbindungsöffnung (A15), die ermöglicht, dass der Spalt (A14, B14) mit der Außenseite des Abdeckmaterials (A52, B52) in Verbindung steht, bei einer Temperatur von 60°C oder mehr gebildet wird, wobei das Abdeckmaterial (A52, B52) ein Polymerfilm ist, der bei einer Temperatur von 60°C oder mehr schmilzt.

8. Wärmeübertragungsunterdrückungsfolie (A50, A60, A90, A95, A110, A120, A130, B60) für einen Batteriepack (A100, B100) gemäß einem der Ansprüche 1 bis 6, wobei
der Spalt (A14, B14) bei einer Temperatur von weniger als 60°C abgedichtet wird und
das Abdeckmaterial (A52, B52) so konfiguriert ist, dass eine Verbindungsöffnung (A15), die ermöglicht, dass der Spalt (A14, B14) mit der Außenseite des Abdeckmaterials (A52, B52) in Verbindung steht, bei einer Temperatur von 60°C oder mehr gebildet wird, wobei
das wärmeisolierende Material (A11, A21, A31, A41, A51, A61, A71, B11, B21, B31, B41, B61, B71) mit dem Abdeckmaterial (A52, B52) mit einem Klebstoff (A16a, A16b, A16c), der bei einer Temperatur von 60°C oder mehr schmilzt, verbunden ist, und wenn der Klebstoff (A16a, A16b, A16c) geschmolzen ist, die Verbindungsöffnung (A15) gebildet wird, oder
wenn eine Anzahl des Abdeckmaterials (A52, B52) zwei oder mehr beträgt, die Abdeckmaterialien (A52, B52) mit einem Klebstoff (A16a, A16b, A16c), der bei einer Temperatur von 60°C oder mehr schmilzt, miteinander verbunden sind, und wenn der Klebstoff (A16a, A16b, A16c) geschmolzen ist, die Verbindungsöffnung (A15) gebildet wird.

9. Wärmeübertragungsunterdrückungsfolie (A110, A120, A130) für einen Batteriepack (A100, B100) gemäß Anspruch 8, wobei
Klebstoffe (A16a, A16b, A16c) mit unterschiedlichen Schmelztemperaturen als der Klebstoff (A16a, A16b, A16c) in Bereichen so verwendet sind, dass die Klebstoffe (A16a, A16b, A16c) schrittweise schmelzen, wenn die Temperatur ansteigt.

10. Wärmeübertragungsunterdrückungsfolie (A110, A120, A130) für einen Batteriepack (A100, B100) gemäß Anspruch 8, wobei
der Klebstoff (A16a, A16b, A16c) auf Bereiche in unterschiedlichen Auftragungsmengen aufgetragen ist, so dass der Klebstoff (A16a, A16b, A16c) in den Bereichen schrittweise schmilzt, wenn die Temperatur ansteigt.

11. Wärmeübertragungsunterdrückungsfolie (A95, B60) für einen Batteriepack (A100, B100) gemäß einem der Ansprüche 1 bis 10, wobei
das Abdeckmaterial (A52, B52) das wärmeisolierende Material (A71, B71) vollständig abdeckt.

12. Wärmeübertragungsunterdrückungsfolie (A95, B60) für einen Batteriepack (A100, B100) gemäß Anspruch 11, wobei mindestens eines von den anorganischen Partikeln oder den anorganischen Fasern, die in dem wärmeisolierenden Material (A71, B71) enthalten sind, ein Material enthalten, das bei Erwärmung Feuchtigkeit freisetzt.

13. Batteriepack (A100, B100), in dem Batteriezellen (A20, B20) in Reihe oder parallel geschaltet sind, wobei
die Wärmeübertragungsunterdrückungsfolie (A50, A60, A90, A95, A110, A120, A130, B60) für einen Batteriepack (A100, B100) gemäß einem der Ansprüche 1 bis 12 zwischen den Batteriezellen (A20, B20) eingefügt ist.

## Revendications

1. Feuille de suppression de transfert de chaleur (A50 ; A60 ; A90 ; A95 ; A110 ; A120 ; A130 ; B60) pour un bloc-batterie (A100 ; B100), la feuille de suppression de transfert de chaleur (A50 ; A60 ; A90 ; A95 ; A110 ; A120 ; A130 ; B60) étant utilisée dans un bloc-batterie (A100 ; B100) dans lequel des cellules de batterie (A20 ; B20) sont connectées en série ou en parallèle, et étant interposée entre les cellules de batterie (A20 ; B20), la feuille de suppression de transfert de chaleur (A50 ; A60 ; A90 ; A95 ; A110 ; A120 ; A130 ; B60) comprenant :
un matériau isolant thermique (A11 ; A21 ; A31 ; A41 ; A51 ; A61 ; A71 ; B11 ; B21 ; B31 ; B41 ; B61 ; B71) contenant au moins des éléments parmi des particules inorganiques ou des fibres inorganiques ; et
un matériau de revêtement (A52 ; B52) recouvrant au moins une partie du matériau isolant thermique (A11 ; A21 ; A31 ; A41 ; A51 ; A61 ; A71 ; B11 ; B21 ; B31 ; B41 ; B61 ; B71), dans laquelle
un vide (A14 ; B14) est formé entre le matériau isolant thermique (A11 ; A21 ; A31 ; A41 ; A51 ; A61 ; A71 ; B11 ; B21 ; B31 ; B41 ; B61 ; B71) et le matériau de revêtement (A52 ; B52), dans laquelle
le matériau de revêtement (A52 ; B52) présente une portion concave (A53a ; B53a) et une portion convexe (A53b ; B53b) sur la surface faisant face au matériau isolant thermique (A11 ; A21 ; A31 ; A41 ; A51 ; A61 ; A71 ; B11 ; B21 ; B31 ; B41 ; B61 ; B71),
le vide (A14 ; B14) est formé entre la portion concave (A53a ; B53a) et le matériau isolant thermique (A11 ; A21 ; A31 ; A41 ; A51 ; A61 ; A71 ; B11 ; B21 ; B31 ; B41 ; B61 ; B71), et
le vide (A14 ; B14) communique avec l'extérieur du matériau isolant thermique (A11 ; A21 ; A31 ; A41 ; A51 ; A61 ; A71 ; B11 ; B21 ; B31 ; B41 ; B61 ; B71) et du matériau de revêtement (A52 ; B52).

2. Feuille de suppression de transfert de chaleur (A50 ; A60 ; A90 ; A95 ; A110 ; A120 ; A130 ; B60) pour un bloc-batterie (A100 ; B100) selon la revendication 1, dans laquelle
la portion convexe (A53b ; B53b) du matériau de revêtement (A52 ; B52) est liée au matériau isolant thermique (A11 ; A21 ; A31 ; A41 ; A51 ; A61 ; A71 ; B11 ; B21 ; B31 ; B41 ; B61 ; B71).

3. Feuille de suppression de transfert de chaleur (A60 ; A95 ; A110 ; A120 ; A130 ; B60) pour un bloc-batterie (A100 ; B100) selon la revendication 1, dans laquelle
le matériau isolant thermique (A11 ; A21 ; A31 ; A41 ; A61 ; A71 ; B11 ; B21 ; B31 ; B41 ; B61 ; B71) présente une portion concave (A13a, A13c, A13d ; B13a, B13c, B13d) et une portion convexe (A13b ; B13b) sur une surface faisant face au matériau de revêtement (A52 ; B52).

4. Feuille de suppression de transfert de chaleur (A60 ; A95 ; A110 ; A120 ; A130 ; B60) pour un bloc-batterie (A100 ; B100) selon la revendication 3, dans laquelle
le vide (A14 ; B14) est formé entre la portion concave (A13a, A13c, A13d ; B13a, B13c, B13d) du matériau isolant thermique (A11 ; A21 ; A31 ; A41 ; A61 ; A71 ; B11 ; B21 ; B31 ; B41 ; B61 ; B71) et la portion concave (A53a ; B53a) du matériau de revêtement (A52 ; B52).

5. Feuille de suppression de transfert de chaleur (A60 ; A95 ; A110 ; A120 ; A130 ; B60) pour un bloc-batterie (A100 ; B100) selon la revendication 4, dans laquelle
la portion convexe (A13b ; B13b) du matériau isolant thermique (A11 ; A21 ; A31 ; A41 ; A61 ; A71 ; B11 ; B21 ; B31 ; B41 ; B61 ; B71) est liée à la portion convexe (A53b ; B53b) du matériau de revêtement (A52 ; B52).

6. Feuille de suppression de transfert de chaleur (A50 ; A60 ; A90 ; A95 ; A110 ; A120 ; A130 ; B60) pour un bloc-batterie (A100 ; B100) selon l'une quelconque des revendications 1 à 4, dans laquelle
le matériau de revêtement (A52 ; B52) est formé d'un film polymère gaufré ou d'une plaque métallique.

7. Feuille de suppression de transfert de chaleur (A50 ; A60 ; A90 ; A95 ; A110 ; A120 ; A130 ; B60) pour un bloc-batterie (A100 ; B100) selon l'une quelconque des revendications 1 à 6, dans laquelle
le vide (A14 ; B14) est scellé à une température inférieure à 60°C, et le matériau de revêtement (A52 ; B52) est configuré de telle sorte qu'une ouverture de communication (A15) qui permet au vide (A14 ; B14) de communiquer avec l'extérieur du matériau de revêtement (A52 ; B52) soit formée à une température supérieure ou égale à 60°C, dans laquelle le matériau de revêtement (A52 ; B52) est un film polymère qui fond à une température supérieure ou égale à 60°C.

8. Feuille de suppression de transfert de chaleur (A50 ; A60 ; A90 ; A95 ; A110 ; A120 ; A130 ; B60) pour un bloc-batterie (A100 ; B100) selon l'une quelconque des revendications 1 à 6, dans laquelle
le vide (A14 ; B14) est scellé à une température inférieure à 60°C, et
le matériau de revêtement (A52 ; B52) est configuré de telle sorte qu'une ouverture de communication (A15) qui permet au vide (A14 ; B14) de communiquer avec l'extérieur du matériau de revêtement (A52 ; B52) soit formée à une température supérieure ou égale à 60°C, dans laquelle
le matériau isolant thermique (A11 ; A21 ; A31 ; A41 ; A51 ; A61 ; A71 ; B11 ; B21 ; B31 ; B41 ; B61 ; B71) est lié au matériau de revêtement (A52 ; B52) avec un adhésif (A16a, A16b, A16c) qui fond à une température supérieure ou égale à 60°C et lorsque l'adhésif (A16a, A16b, A16c) a fondu, l'ouverture de communication (A15) est formée, ou
le nombre de matériaux de revêtement (A52 ; B52) étant supérieur ou égal à deux, les matériaux de revêtement (A52 ; B52) sont liés l'un à l'autre avec un adhésif (A16a, A16b, A16c) qui fond à une température supérieure ou égale à 60°C et lorsque l'adhésif (A16a, A16b, A16c) a fondu, l'ouverture de communication (A15) est formée.

9. Feuille de suppression de transfert de chaleur (A110 ; A120 ; A130) pour un bloc-batterie (A100 ; B100) selon la revendication 8, dans laquelle
des adhésifs (A16a, A16b, A16c) présentant différentes températures de fusion sont utilisés en tant qu'adhésif (A16a, A16b, A16c) dans des régions de telle sorte que les adhésifs (A16a, A16b, A16c) fondent progressivement dans les régions lorsque la température augmente.

10. Feuille de suppression de transfert de chaleur (A110 ; A120 ; A130) pour un bloc-batterie (A100 ; B100) selon la revendication 8, dans laquelle
l'adhésif (A16a, A16b, A16c) est appliqué à des régions dans différentes quantités d'application de telle sorte que l'adhésif (A16a, A16b, A16c) fonde progressivement dans les régions lorsque la température augmente.

11. Feuille de suppression de transfert de chaleur (A95 ; B60) pour un bloc-batterie (A100 ; B100) selon l'une quelconque des revendications 1 à 10, dans laquelle
le matériau de revêtement (A52 ; B52) recouvre entièrement le matériau isolant thermique (A71 ; B71).

12. Feuille de suppression de transfert de chaleur (A95 ; B60) pour un bloc-batterie (A100 ; B100) selon la revendication 11, dans laquelle
au moins les éléments parmi les particules inorganiques ou les fibres inorganiques contenues dans le matériau isolant thermique (A71 ; B71) contiennent un matériau qui libère l'humidité lorsqu'il est chauffé.

13. Bloc-batterie (A100 ; B100) dans lequel des cellules de batterie (A20 ; B20) sont connectées en série ou en parallèle, dans lequel
la feuille de suppression de transfert de chaleur (A50 ; A60 ; A90 ; A95 ; A110 ; A120 ; A130 ; B60) pour un bloc-batterie (A100 ; B100) selon l'une quelconque des revendications 1 à 12 est interposée entre les cellules de batterie (A20 ; B20).
